# EUROPEAN PATENT APPLICATION

(11) **EP 4 814 736 A1**
(43) Date of publication of application: **30.09.2026**
(21) Application number: 24909764.3
(22) Date of filing: 05.08.2024
(51) Int. Cl.: G06F 16/182

(54) **METHOD AND APPARATUS FOR PROCESSING DATA**

(30) Priority: 29.12.2023 CN 202311866573
(71) Applicant: Huawei Technologies Co., Ltd., Shenzhen, Guangdong 518129 (CN)
(72) Inventor: TAN, Chunhua, Shenzhen, Guangdong 518129 (CN); ZHANG, Peng, Shenzhen, Guangdong 518129 (CN)
(74) Representative: Grünecker Patent- und Rechtsanwälte PartG mbB
(86) International application number: PCT/CN2024/109716
(87) International publication number: WO 2025/138810

(57) **Abstract**

A method for processing data in a distributed storage system is provided. The method includes: A first node among a plurality of nodes receives a first access request, where the first access request includes a first operation indication and a first object indication, the first object indication indicates a first object in a directory, and the first operation indication indicates an operation to be performed on the first object; the first node finds, based on the first object indication, that a second node among the plurality of nodes stores data of the first object; the first node obtains the data of the first object from the second node; and the first node operates on the data of the first object based on the first operation indication. According to this method, access hotspots can be avoided or eliminated.

## Description

This application claims priority to Chinese Patent Application No. 202311866573.8, filed with the China National Intellectual Property Administration on December 29, 2023 and entitled "METHOD AND APPARATUS FOR PROCESSING DATA", which is incorporated herein by reference in its entirety.

### TECHNICAL FIELD

This application relates to the field of data storage technologies, and in particular, to a method and an apparatus for processing data.

### BACKGROUND

In addition to providing a file storage service, a distributed file system further provides a metadata service (MDS). Metadata refers to data that describes a file or directory. The metadata service includes storing metadata and supporting metadata access operations, for example, reading metadata or modifying metadata.

Distributed file systems may be classified into symmetric distributed file systems and asymmetric distributed file systems. In an asymmetric distributed file system, only some storage nodes support metadata access, which is prone to causing metadata access bottlenecks. In a symmetric distributed file system, every storage node supports metadata access. However, metadata access in the symmetric distributed file system is directory-based home access. To be specific, metadata of an object in a directory is stored in a home node of the directory, and any access request for the metadata of the object in the directory is processed only by the home node. When metadata of an object in a directory is frequently accessed, the home node of the directory may become an access hotspot, thereby degrading metadata operation performance.

### SUMMARY

This application provides a method and an apparatus for processing data in a distributed storage system, to avoid or eliminate access hotspots.

According to a first aspect, a method for processing data in a distributed storage system is provided. The distributed storage system includes a plurality of nodes, objects in a directory are stored in the plurality of nodes, and the objects are subdirectories or files of the directory. The method includes: A first node among the plurality of nodes receives a first access request, where the first access request includes a first operation indication and a first object indication, the first object indication indicates a first object in the directory, and the first operation indication indicates an operation to be performed on the first object; the first node finds, based on the first object indication, that a second node among the plurality of nodes stores data of the first object; the first node obtains the data of the first object from the second node; and the first node operates on the data of the first object based on the first operation indication.

The distributed storage system may include a plurality of storage nodes. In this case, the plurality of nodes are specifically the storage nodes in the distributed storage system.

The distributed storage system may include a plurality of storage nodes and at least one compute node. In this case, the plurality of nodes specifically may be the storage nodes in the distributed storage system, or the plurality of nodes may include the storage nodes and the compute node (that is, a part of nodes among the plurality of nodes are the storage nodes, and the other part of nodes are the compute node).

Data of an object may be metadata of the object. When the object is a file, the data of the object may be metadata of the object, or may be content of the object, or may include both metadata of the object and content of the object.

In addition, processing on an access request may be classified into semantic processing and data processing. The semantic processing may also be referred to as a semantic operation, and refers to obtaining executable information of a node based on information about an upper-layer application in the access request, to facilitate data processing on the data of the object. The data processing is also referred to as a data operation, and refers to an operation by the node on the data of the object, for example, a modify operation, a read operation, or a create operation. In the method, querying for a node that stores the data of the object belongs to the semantic processing on the access request. Obtaining the data of the object and operating on the data of the object belong to the data processing on the access request. According to this method, the same node can complete the semantic processing and the data processing on the access request, and the node may be a node other than the node that stores the data of the object.

In the method provided in this application, a node that receives and processes an access request for an object and a home node of a directory to which the object belongs may be different nodes. Any node among the plurality of nodes may receive one or more access requests for the same object and process the received access requests. In other words, according to this method, a node of the directory other than the home node may receive and process an access request for an object in the directory (for example, an access request for metadata of the object).

More specifically, any node of the directory other than the home node may receive an access request for an object in the directory. In other words, the access request for the object may be sent to any node of the directory other than the home node, and the access request for the object in the directory does not need to be sent to the home node of the directory. For example, it may be set that the directory includes an object F1, the home node of the directory is a node G1, and the plurality of nodes further include nodes such as a node G2 and a node G3. The nodes such as the node G2 and the node G3 may receive an access request for the object F1, and the node G1 does not need to receive the access request for the object F1. In this way, when the object in the directory is frequently accessed, a node like the node G2 or the node G3 may receive the access request for the object F1, thereby reducing pressure of receiving the access request by the home node of the directory.

The directory may further include a plurality of objects such as an object F2 and an object F3. Access requests for different objects may be respectively received by different nodes, so that pressure of receiving the access requests may be shared between the different nodes.

A node that receives an access request may process the access request. As described above, the node that receives the access request may be any node, and does not need to be the home node of the directory. In this way, a node of the directory other than the home node may process the access request. Back to the foregoing example, the node like the node G2 or the node G3 receives the access request for the object F1, and the node G2 or the node G3 then may process the access request for the object F1. In this way, the home node of the directory does not need to process the access request for the object F1, so that pressure of processing the access request by the home node of the directory is reduced, thereby avoiding or eliminating an access hotspot that may be caused by processing the access request for the object F1 by the home node of the directory.

Access requests for different objects in the directory may be respectively received and processed by different nodes, so that pressure of processing the access requests may be shared between the different nodes.

In addition, as described above, any node may receive and process the access request for the object F1. Therefore, a node that receives the access request for the object F1 may not store data of the object F1. It may be set that the node G2 receives the access request for the object F1, and the node G2 does not store the data of the object F1. In the method provided in this application, the node G2 may find a node that stores the data of the object F1, and obtain the data of the object F1 from the node. Therefore, the node G2 may process the access request for the object F1 based on the data of the object F1.

In short, according to the method provided in this application, any node among the distributed storage system (for example, a node of the directory other than the home node) may receive and process an access request for an object in the directory. Therefore, when an object in the directory needs to be accessed, directory-based home access does not need to be performed, thereby avoiding or eliminating problems such as an access hotspot caused by the home access.

In a possible implementation, a third node among the plurality of nodes is configured to record nodes that store data of the objects in the directory; that the first node finds, based on the first object indication, that the second node among the plurality of nodes stores the data of the first object includes: the first node finds, in the third node based on the first object indication, that the second node stores the data of the first object, where the third node is configured to, after the first node obtains the data of the first object, record that the first node stores the data of the first object.

In this implementation, when obtaining first data, the node inevitably stores the data of the first object. The storage herein may be caching (that is, the data of the first object is stored in a memory). When the node obtains the first data, for example, when the first node obtains the first data from the second node, that the first node stores the data of the first object may be recorded in the third node. In this way, when another node needs to obtain the data of the first object, the other node may find in the third node that the first node stores the data of the first object, and obtain the data of the first object from the first node. Therefore, when the node that stores the data of the first object is not fixed, it can be ensured that a node that needs the data of the first object can obtain the data of the first object. In addition, each time when an access request for the first object is processed, the data of the first object does not need to be obtained from a home node of the first object, thereby reducing pressure, on the home node of the first object, of transmitting the data of the first object.

In a possible implementation, the method further includes: The first node receives a second access request, where the second access request includes a second operation indication and a second object indication, the second object indication indicates a second object in the directory, and the second operation indication indicates an operation to be performed on the second object; and the first node sends the second operation indication and the second object indication to the third node when load of the first node is greater than or equal to load of the third node, where the third node is configured to obtain data of the second object based on the second object indication and operate on the data of the second object based on the second operation indication.

The first node is a node that first receives the second access request among the plurality of nodes. In other words, the first node is an access node of the second access request. In this implementation, when load of the access node of the second access request is not less than the load of the third node, the access node sends the second access request to the third node, so that the first access request is preferentially processed by the third node. The third node can locally complete query for a node that stores the data of the second object, thereby improving query efficiency and further improving efficiency of processing the second access request.

In a possible implementation, that the first node obtains the data of the first object from the second node includes: the first node obtains the data of the first object from the second node when the data of the first object stored in the second node is the latest data of the first object.

A plurality of nodes may store the data of the first object, and the data of the first object stored in some nodes may be historical data of the first object instead of the latest data of the first object. Usually, an access request for an object is a request for operating on the latest data of the object. In this implementation, the first node obtains the data of the first object from the second node only when the data stored in the second node is the latest data of the first object. This can ensure that the first node obtains the latest data of the first object, and further ensure that the first node processes the first access request based on the latest data of the first object, so that the first access request can be correctly processed.

In a possible implementation, the plurality of nodes further include a fourth node configured to persistently store the data of the first object, and the method further includes: the first node sends operated data of the first object to the fourth node, to cause the fourth node to persistently store the operated data of the first object, where the operated data of the first object is data obtained by the first node operating on the data of the first object based on the first operation indication.

In this implementation, after completing the operation on the data of the first object, the first node may send the operated data to the fourth node, and the fourth node completes persistent storage of the operated data. The fourth node is a node that performs a persistent storage operation on the data of the first object, and is not necessarily the home node of the first object. The fourth node may store the operated data of the first object in a local hard disk, or may store the operated data of the first object to a hard disk of another node. For example, when an available capacity of the local hard disk of the fourth node is sufficient, the fourth node may store the data of the first object in the local hard disk. When the available capacity of the local hard disk of the fourth node is insufficient, the fourth node may store the data of the first object to the hard disk of the other node. When the fourth node stores the operated data of the first object in the local hard disk, the fourth node is the home node of the first object.

In a possible implementation, the data of the first object is located in a first page, and that the first node finds, based on the first object indication, that the second node among the plurality of nodes stores the data of the first object includes: the first node finds, based on the first object indication, that the second node includes the first page; and that the first node obtains the data of the first object from the second node includes: the first node obtains the first page from the second node, to obtain the data of the first object.

In this implementation, the data of the object is stored at a granularity of a page, thereby facilitating storage and management of the data of the object. In addition, when the data of the object is obtained, a page including the data of the object is queried for and obtained, so that the data of the object can be conveniently and quickly obtained.

In a possible implementation, the first page may be associated with memory addresses of different nodes among the plurality of nodes, and the memory addresses associated with the first page are used to store data in the first page; that the first node finds, based on the first object indication, that the second node includes the first page includes: the first node finds, based on the first object indication, that the first page is associated with a first memory address of the second node; and that the first node obtains the first page from the second node includes: the first node obtains the data in the first page from the first memory address; and the first node associates the first page with a second memory address of the first node, and stores the data in the first page into the second memory address.

The page is used to logically store the data of the object, and the data in the page is specifically stored in a memory address associated with the page. The page may be associated with memory addresses of different nodes, so that the plurality of nodes can store the data of the object simultaneously, thereby implementing storage of the data of the object in the plurality of nodes. That a memory of a node stores the data of the object may be referred to as that the node caches the data of the object.

In this implementation, the first node finds that the first page is associated with the memory address of the second node, and may obtain the data in the first page from the memory address that is in the second node and associated with the first page, to obtain the data of the first object. The first node may associate the first page with the memory address of the first node and store the data in the first page into the memory address that is in the first node and associated with the first page, to store the data of the first object to a memory of the first node, so that a processor of the first node can operate on the data of the first object.

In a possible implementation, the method further includes: The first node receives a third access request, where the third access request includes a third operation indication and a third object indication, the third object indicates a third object in the directory, and the third operation indication indicates an operation to be performed on the third object; the first node finds, based on the third object indication, that a fifth node among the plurality of nodes stores data of the third object; and the first node sends the third operation indication to the fifth node, to cause the fifth node to operate on the data of the third object based on the third operation indication.

In this implementation, when an access node of an access request and a node that stores data of an accessed object of the access request are not the same node, the access node of the access request may forward the access request to the node that stores the data of the accessed object, so that the node that stores the data of the accessed object processes the access request, thereby omitting an operation of performing transmission of the data of the accessed object between different nodes, and improving efficiency of processing the access request.

In addition, in this implementation, the access node of the access request and the node that stores the data of the accessed object of the access request can jointly process the access request, so that the load generated by processing the access request is borne by a plurality of nodes, thereby avoiding access hotspots.

The access node of the access request may perform semantic processing on the access request. The node that stores the data of the accessed object of the access request may perform data processing on the access request. Therefore, load of the semantic processing on the access request may be borne by the access node of the access request, and load of the data processing on the access request may be borne by the node that stores the data of the accessed object.

The semantic processing on the access request further includes identifying a storage position of the data of the accessed object. The storage position may include an identifier of a page in which the accessed object is located. When the storage position of the data of the accessed object is identified, the storage position and an operation indication may be sent to the node that performs data processing. The node that performs the data processing then may directly obtain the data of the accessed object from the storage position, so that operations such as identifying the object and querying for the storage position of the data of the object do not need to be performed again, and only operations such as obtaining the data and operating on the data (that is, the data processing) are performed.

Therefore, the node that performs the semantic processing does not need to perform the data processing, and therefore does not need to bear the load of the data processing. The node that performs the data processing does not need to perform the semantic processing, and therefore does not need to bear the load of the semantic processing.

In a possible implementation, the first operation indication indicates to create the first object; that the first node finds, based on the first object indication, that the second node among the plurality of nodes stores the data of the first object includes: the first node finds, based on the first object indication, that the second node includes a second page, where the second page is used to store the data of the first object; that the first node obtains the data of the first object from the second node includes: the first node obtains the second page from the second node; and that the first node operates on the data of the first object based on the first operation indication includes: generating the data of the first object, and storing the data of the first object to the second page.

Querying for the second page that is used to store the data of the first object by the first node belongs to semantic processing on the first access request. Obtaining the page, generating the data of the first object, and storing the generated data of the first object in the second page belong to data processing on the first access request.

In a possible implementation, the first access request is initiated by a sixth node in the distributed storage system, the first operation indication indicates that a read operation needs to be performed on the first object; and that the first node operates on the data of the first object based on the first operation indication includes: the first node sends the data of the first object to the sixth node.

Sending the data of the first object to the sixth node belongs to data processing on the first access request.

In a possible implementation, the first operation indication indicates that a modify operation needs to be performed on the first object; and that the first node operates on the data of the first object based on the first operation indication includes: the first node modifies the data of the first object based on the first operation indication.

Modifying the data of the first object belongs to data processing on the first access request.

According to a second aspect, an apparatus for processing data is provided. A distributed storage system includes a plurality of nodes, the apparatus is disposed on a first node among the plurality of nodes, objects in a directory are stored in the plurality of nodes, and the objects are subdirectories or files of the directory. The apparatus includes: a receiving unit, configured to receive a first access request, where the first access request includes a first operation indication and a first object indication, the first object indication indicates a first object in the directory, and the first operation indication indicates an operation to be performed on the first object; a querying unit, configured to find, based on the first object indication, that a second node among the plurality of nodes stores data of the first object; an obtaining unit, configured to obtain the data of the first object from the second node; and an operating unit, configured to operate on the data of the first object based on the first operation indication.

In a possible implementation, a third node among the plurality of nodes is configured to record nodes that store data of the objects in the directory; and the querying unit is configured to find, in the third node based on the first object indication, that the second node stores the data of the first object, where the third node is configured to, after the obtaining unit obtains the data of the first object, record that the first node stores the data of the first object.

In a possible implementation, the apparatus further includes a sending unit; the receiving unit is further configured to receive a second access request, where the second access request includes a second operation indication and a second object indication, the second object indication indicates a second object in the directory, and the second operation indication indicates an operation to be performed on the second object; and the sending unit is configured to send the second operation indication and the second object indication to the third node when load of the first node is greater than or equal to load of the third node, where the third node is configured to obtain data of the second object based on the second object indication, and operate on the data of the second object based on the second operation indication.

In a possible implementation, the obtaining unit is configured to obtain the data of the first object from the second node when the data of the first object stored in the second node is the latest data of the first object.

In a possible implementation, the plurality of nodes further include a fourth node configured to persistently store the data of the first object, and the apparatus further includes: the sending unit, configured to send operated data of the first object to the fourth node, to cause the fourth node to persistently store the operated data of the first object, where the operated data of the first object is data obtained by the operating unit operating on the data of the first object based on the first operation indication.

In a possible implementation, the data of the first object is located in a first page; the querying unit is configured to find, based on the first object indication, that the second node includes the first page; and the obtaining unit is configured to obtain the first page from the second node, to obtain the data of the first object.

In a possible implementation, the first page may be associated with memory addresses of different nodes among the plurality of nodes, and the memory addresses associated with the first page are used to store data in the first page; the querying unit is configured to find, based on the first object indication, that the first page is associated with a first memory address of the second node; the obtaining unit is configured to obtain the data in the first page from the first memory address; and the obtaining unit is further configured to: associate the first page with a second memory address of the first node, and store the data in the first page into the second memory address.

In a possible implementation, the apparatus further includes the sending unit; the receiving unit is configured to receive a third access request, where the third access request includes a third operation indication and a third object indication, the third object indicates a third object in the directory, and the third operation indication indicates an operation to be performed on the third object; the querying unit is configured to find, based on the third object indication, that a fifth node among the plurality of nodes stores data of the third object; and the sending unit is configured to send the third operation indication to the fifth node, to cause the fifth node to operate on the data of the third object based on the third operation indication.

According to a third aspect, an apparatus for processing data is provided, including: a memory, configured to store an executable program; and a processor, configured to run the executable program to perform the method according to the first aspect.

According to a fourth aspect, a computer-readable storage medium is provided, including computer program instructions, where when the computer program instructions are executed by a computer device, the computer device performs the method according to the first aspect.

According to a fifth aspect, a computer program product including instructions is provided, where when the instructions are run by a computer device, the computer device is caused to perform the method according to the first aspect.

For beneficial effects of the second aspect to the fifth aspect, refer to the foregoing descriptions of the beneficial effects of the first aspect. Details are not described herein again.

### BRIEF DESCRIPTION OF DRAWINGS

FIG. 1A is a diagram of a distributed storage system according to an embodiment of this application;
FIG. 1B is a diagram of a distributed storage system according to an embodiment of this application;
FIG. 2 is a diagram of a distributed storage system according to an embodiment of this application;
FIG. 3 is a diagram of a structure of nodes in a distributed storage system according to an embodiment of this application;
FIG. 4 is a diagram of a structure of nodes in a distributed storage system according to an embodiment of this application;
FIG. 5 is a diagram of a data storage manner according to an embodiment of this application;
FIG. 6 is a diagram of a method for processing data according to an embodiment of this application;
FIG. 7 is a diagram of a cache coherence protocol according to an embodiment of this application;
FIG. 8 is a diagram of a cache coherence protocol according to an embodiment of this application;
FIG. 9 is a diagram of a load balancing method according to an embodiment of this application;
FIG. 10 is a diagram of a load balancing method according to an embodiment of this application;
FIG. 11 is a diagram of functions of a policy control node according to an embodiment of this application;
FIG. 12 is a diagram of a load balance policy according to an embodiment of this application;
FIG. 13 is a diagram of a method for processing data according to an embodiment of this application;
FIG. 14 is a diagram of a structure of an apparatus for processing data according to an embodiment of this application; and
FIG. 15 is a diagram of a structure of an apparatus for processing data according to an embodiment of this application.

### DESCRIPTION OF EMBODIMENTS

The following describes solutions in embodiments of this application with reference to accompanying drawings. In embodiments of this application, "a plurality of" means two or more. The terms such as "first", "second", and the like are merely used to distinguish between similar objects, and do not need to be used to describe a specific sequence or a quantity of objects.

For ease of understanding the solutions in embodiments of this application, before the solutions in embodiments of this application are described in detail, some technical terms that may be used in embodiments of this application are first described.

Distributed storage system: is a network storage architecture including a plurality of storage nodes. In some embodiments, the distributed storage system may further include at least one compute node. The storage nodes and the compute node may be collectively referred to as nodes. The storage nodes are configured to store data, and the data may be stored in different storage nodes in a distributed manner, to implement high-reliability storage, high-performance access, and the like of the data. A client program is run in the compute node, and may access the data stored in the storage nodes. A distributed file system is a common distributed storage system. Different storage nodes in the distributed storage system may be connected through a network, and the storage nodes and the compute node may be connected through a network.

Object in a directory: a general name of files and subdirectories in the directory. To be specific, the object in the directory may be a file in the directory, or may be a subdirectory of the directory.

Access request: information used to request to perform an operation on an object, where the operation includes creating the object, modifying content or metadata of the object, reading content or metadata of the object, or the like.

Access node of an access request: a node that first receives the access request, and a node that is configured to process an access request and that is in a distributed storage system in which the node is located. The access node of the access request is not necessarily a node that actually processes the access request. In other words, the access node may process the access request, or may forward the access request to another node that is configured to process an access request and that is in the distributed storage system, so that the other node processes the access request.

Home node of an object: a storage node that persistently stores data of the object in a distributed storage system. In other words, a hard disk of the home node of the object stores the data of the object. Usually, home nodes of objects in the same directory are the same node. Therefore, the home node of the object may also be referred to as the home node of a directory to which the object belongs. Home nodes of different directories may be the same node or may be different nodes.

Cache node of an object: a node whose memory stores data of the object. In other words, if a memory of a node stores the data of the object, the node is referred to as a cache node of the object.

Management node of an object: also referred to as a master (master) node of the object, is a node in a distributed storage system, and is configured to record a node that stores data of the object. The management node of the directory records a cache node and a home node of the object. Usually, management nodes of objects in the same directory are the same node. Therefore, the management node of the object may also be referred to as a management node of a directory in which the object is located. In addition, the management node of the object and the home node of the object may be the same node or may be different nodes. Management nodes of different directories may be the same node or may be different nodes.

Latest data of an object: data of the latest version of the object, to be specific, data obtained by completing the latest modify operation on the object.

Page (page): a virtual address or virtual storage space used to store data. The page may also be referred to as a data block or a logical block, and is used to implement logical storage of data. The page is associated with a physical storage address (for example, a memory address). The physical storage address associated with the page is used to physically store data in the page. Specifically, the data in the page refers to data stored in the physical storage address associated with the page.

Persistent storage: also referred to as flushing data to a disk, and refers to storing data from memory to a hard disk for permanent storage of the data.

Metadata of an object: data used to describe the object. Metadata of a file includes a name of the file, an identifier (identifier, ID) of the file, latest modification time, a size, a directory in which the file is located, and the like. Metadata of a directory includes a name of the directory, an ID of the directory, creation time, an ID of an upper-level directory (that is, a parent directory) in which the directory is located, and the like.

Dentry (dentry): An object in a directory corresponds to a dentry of the directory, and the dentry is used to record metadata such as a name of the object and an ID of an index node (inode) of the object. Dentries of all objects in a directory form a dentry table of the directory.

Inode: an index node, and a data structure used to record metadata of an object. The inode of an object includes an ID of the inode and other metadata of the object. An inode including metadata of an object may be referred to as an inode of the object. Inodes of all objects in a directory form an inode table. The inode table is a row-oriented table, and a row in the inode table records an inode of an object.

Index structure: a structure that records a mapping relationship between an identifier of an object and a storage position of data of the object. The index structure uses an identifier of an object as an input, and a storage position of data of the object may be positioned based on the identifier of the object. Common index structures include a hash (hash) index structure, a B tree (B tree), a B+ tree (B+ tree), a B-link tree (B-link tree), and the like. The index structure usually has a plurality of layers, and each layer includes at least one page node. A page node indicates a page (page). In a tree index structure, a page node at a bottommost layer is referred to as a leaf node, a page node at an upper layer of the leaf node may be referred to as an intermediate node, and a page node at a topmost layer is referred to as a root node.

Atomicity (atomicity): A plurality of operations are all successfully performed or none of the operations is performed, without partial execution.

Two-phase transaction: also referred to as two-phase commit (two-phase commit, 2PC), and is an algorithm designed in the field of computer networks and databases to enable all nodes in a distributed system architecture to keep consistency when committing transactions.

In a solution, to reduce the probability of access hotspots in a distributed file system, objects in a directory in the distributed file system are classified into different subdirectories through subdirectory division, and then the different subdirectories are respectively stored in different storage nodes, where a storage node in which a subdirectory is located supports access to metadata of an object in the subdirectory. The access hotspot is not eliminated in this solution. For example, when metadata of an object in a subdirectory is frequently accessed, an access hotspot also occurs on a storage node in which the subdirectory is located. In addition, the subdirectory is invisible to the outside. When an object in the subdirectory changes, a dentry table of the subdirectory and a dentry table of a directory (that is, the directory on which subdirectory division is performed to obtain the subdirectory) need to be synchronously modified. Because the dentry table of the subdirectory and the dentry table of the directory are usually located in different storage nodes, the two-phase transaction is required to ensure atomicity. As a result, performance (for example, performance of operations such as reading metadata and modifying metadata) of a storage node in supporting metadata access deteriorates.

Embodiments of this application provide a distributed storage system 100 and a method for processing data. According to this method, a plurality of nodes in the distributed storage system 100 can provide an access service for the same object. That is, access to the object may be processed by different nodes in the distributed storage system 100. The object is a file or a subdirectory in a directory. In this way, an access hotspot caused when a fixed node processes access to the object in the directory is eliminated. In addition, in the distributed storage system, a node that processes an access request may obtain data to be processed based on the access request (that is, data of an accessed object of the access request) and process the data. In other words, the same node may process the data to be processed based on the access request. Therefore, cross-node modification of metadata does not occur, in other words, a two-phase transaction is not required to ensure atomicity, ensuring performance of a node in providing an access service.

The following first describes the distributed storage system 100 according to an embodiment of this application. The distributed storage system 100 may include a plurality of nodes configured to process an access request, including a node 111, a node 112, a node 113, and a node 114.

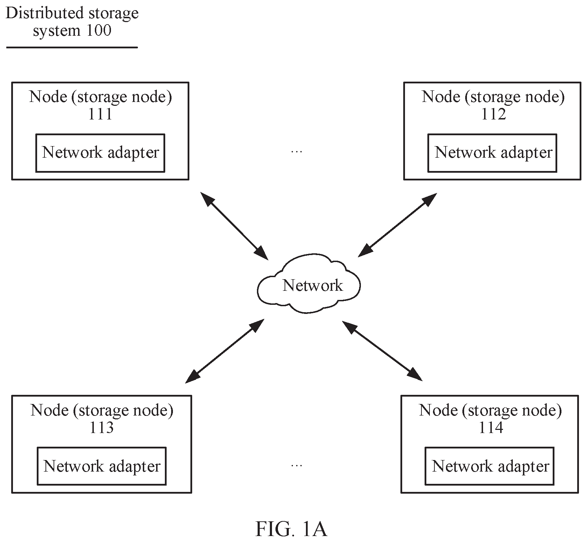

In some embodiments, refer to FIG. 1A. The distributed storage system 100 includes storage nodes, and the nodes configured to process an access request in the distributed storage system 100 are specifically the storage nodes in the distributed storage system 100. The storage node is an apparatus or a device having a data processing capability and a data storage capability, for example, a server. The storage node may include a processor, a memory, and one or more hard disks. The memory may cache data of an object, the processor may operate on the data of the object, and the hard disk may persistently store the data of the object. The one or more hard disks of the storage node may form a storage pool (pool). In addition, in this embodiment, the distributed storage system 100 may include a compute node, or may not include a compute node. When the distributed storage system 100 includes a compute node, the compute node is not configured to process an access request.

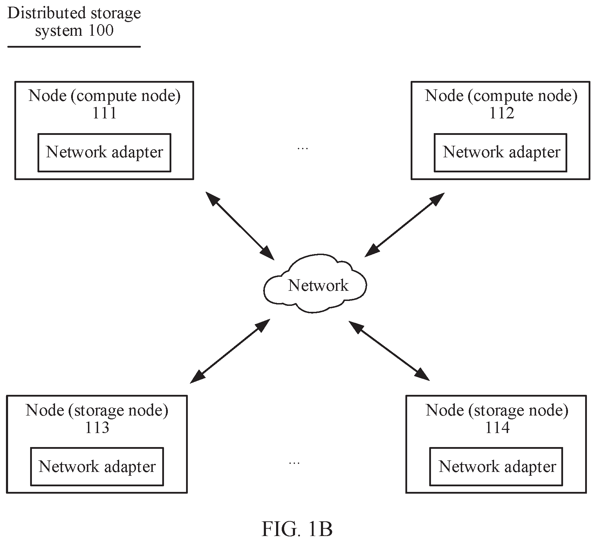

In some embodiments, refer to FIG. 1B. A distributed storage system 100 includes compute nodes and storage nodes. Nodes configured to process an access request in the distributed storage system 100 include both the storage nodes and the compute nodes. For example, as shown in FIG. 1B, a node 111 and a node 112 are compute nodes in the distributed storage system 100, and a node 113 and a node 114 are storage nodes in the distributed storage system 100.

The compute node is an apparatus or a device having a data processing capability. The compute node includes a processor and a memory. The memory may cache data of an object, and the processor may operate on the data of the object. In some embodiments, the compute node 110 may be a server, a terminal, or the like. The terminal may be a mobile phone (mobile phone), a tablet computer, a vehicle-mounted terminal, a notebook computer, a palmtop computer, a computer, or the like. A client program is run in the compute node, which may be used as a client in the distributed storage system 100. In some embodiments, the compute node may be a private client (DPC) of the distributed storage system 100.

In embodiments of this application, the memory may be a dynamic random access memory (dynamic random access memory, DRAM), a non-volatile random access memory (non-volatile random access memory, NVRAM), or the like. The NVRAM may be a non-volatile dual in-line memory module (non-volatile dual in-line memory module, NVDIMM), a storage class memory (storage class memory, SCM), a persistent memory (persistent memory, PMEM), or the like. The hard disk may be a solid-state drive (solid-state drive, SSD).

In some embodiments, the distributed storage system 100 may be a network attached storage (network attached storage, NAS) system. A node in the distributed storage system 100 may be a NAS compute node or a NAS storage node. For example, the node 111 and the node 112 may be NAS compute nodes, and the node 113 and the node 114 may be NAS storage nodes. The NAS storage node may be a NAS server, a NAS array, or the like.

In some embodiments, the distributed storage system 100 may be a storage system based on a storage area network (storage area network, SAN). Different nodes are connected through a fiber channel (fiber channel, FC).

As shown in FIG. 1A or FIG. 1B, different nodes in the distributed storage system 100 may be connected through a network, for example, connected through a wide area network (wide area network, WAN) or a local area network (local area network, LAN). As shown in FIG. 1A or FIG. 1B, a node has a network adapter, and may perform network communication with another node through the network adapter. The network adapter is also referred to as a network interface card (network interface card, NIC). In some embodiments, the network may be a smart network interface card (smart network interface card, SmartNIC) having a data processing unit (data processing unit, DPU). In some embodiments, when two nodes are compute nodes, a network between the two nodes may be a network applicable to computing, for example, an Ethernet (ethernet). In some embodiments, when two nodes are storage nodes, a network between the two nodes may be a network applicable to storage, for example, an infiniband (infiniband, IB) network. In some embodiments, when one of two nodes is a compute node and the other is a storage node, the two nodes may be connected through a network applicable to computing and a network applicable to storage. A network on a compute node side is the network applicable to computing, and a network on a storage node side is the network applicable to storage.

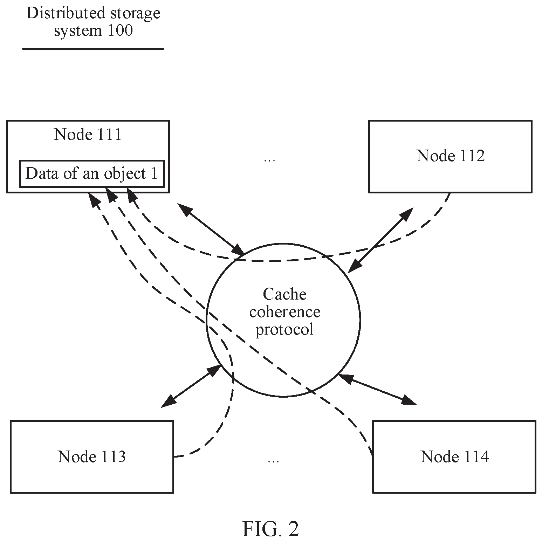

Peer-to-peer access may be implemented between different nodes in the distributed storage system 100. Peer-to-peer access between nodes includes that a node may access data stored in another node, for example, obtain the data stored in the other node. For example, as shown in FIG. 2, a node 112, a node 113, a node 114, and the like may obtain data of an object 1 stored in a node 111. In some embodiments, as shown in FIG. 2, a node may obtain, by using a cache coherence protocol, data of an object stored in another node, to ensure that the latest data of the object is obtained. The cache coherence protocol is described below, and details are not described herein.

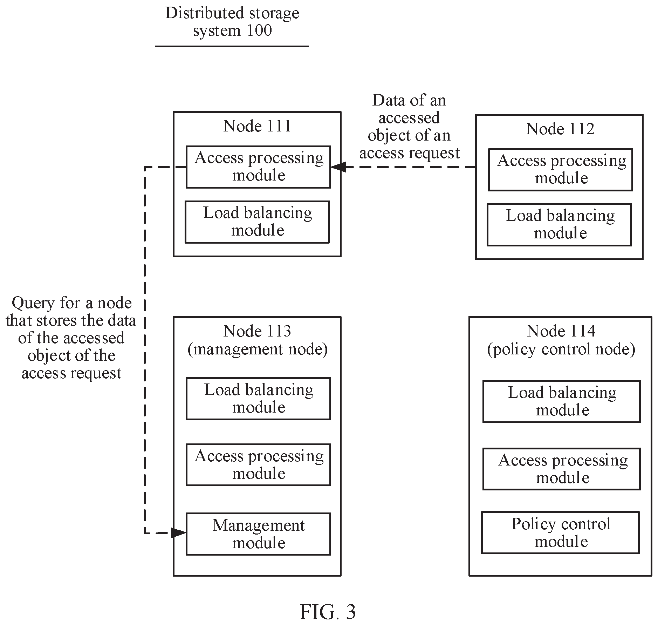

The node in the distributed storage system 100 may process an access request. The access request includes an object indication and an operation indication. The object indication indicates an accessed object of the access request. The accessed object of the access request is an object to be operated based on the access request. The operation indication indicates an operation to be performed on the accessed object. Processing the access request may include: identifying the accessed object of the access request based on the object indication in the access request, identifying a node that stores data of the accessed object, obtaining the data of the accessed object from the node, and operating on the data of the accessed object based on the operation indicated by the operation indication. In some embodiments, as shown in FIG. 3, the node in the distributed storage system 100 includes an access processing module. The access processing module is configured to process an access request. In other words, the node processes an access request by using the access processing module in the node.

In some embodiments, several nodes in the distributed storage system 100 may be used as management nodes, for example, a node 113 shown in FIG. 3. The management node is configured to record a node that stores data of an object, that is, configured to record a node in which data of an object is located. In some embodiments, a node used as the management node is specifically a storage node in the distributed storage system 100. The management node includes a management module, and the management module is configured to record a node that stores data of an object. In other words, the management node stores, by using the management module, a node that stores data of an object. In some embodiments, the management node may also process an access request. For example, the node 113 shown in FIG. 3 includes both a management module and an access processing module, so that the node 113 can both record a node that stores data of an object and process an access request.

The node that stores data of an object may include a cache node of the object, that is, a node whose memory stores the data of the object. The node that stores data of an object may also include a home node of the object, that is, a node whose hard disk stores the data of the object.

A directory in the distributed storage system 100 corresponds to one or more management nodes. The management node corresponding to the directory may be referred to as a management node of the directory. The management node of the directory is configured to record nodes that store data of objects in the directory, that is, cache nodes and home nodes of the objects in the directory. The management node of the directory is associated with an identifier of the directory. For example, the identifier of the directory specifically may be a handle (handle) of the directory. The object indication in the access request includes an identifier of a directory and an identifier of an object, where the object is the accessed object of the access request, and the directory is a directory in which the accessed object of the access request is located. For example, the identifier of the object may be a name of the object or a handle of the object. The node may find the management node of the directory based on the identifier of the directory in the object indication, and query, in the management node based on the identifier of the object in the object indication, for a node that stores data of the object (that is, the accessed object of the access request).

In some embodiments, the node may forward the received access request to another node, so that the other node processes the access request. Therefore, when load of the node that receives the access request (for example, an access node of the access request) is heavy, the node may forward the access request to a node with light load. As shown in FIG. 3, the node in the distributed storage system 100 has a load balancing module. The load balancing module in the node is configured to forward an access request to another node. In an example, one or more nodes in the distributed storage system 100 have a policy control module. The policy control module is configured to control a load balance policy, for example, select a load balance policy from a plurality of load balancing policies, and send the selected load balance policy to the load balancing module of each node, so that the load balancing module in each node can perform access request forwarding based on the selected load balance policy. A node having the policy control module may be referred to as a policy control node. A function of the policy control node and the load balance policy are described in detail below, and details are not described herein.

The data of the object may be metadata of the object, for example, a dentry, an index node, or the like of the object. If the object is a file in a directory, the data of the object may further include content of the file. The content of the file is data of the file or data recorded in the file. The content of the file may be stored in data space of the file. The data space of the file is a logical segment of contiguous data space.

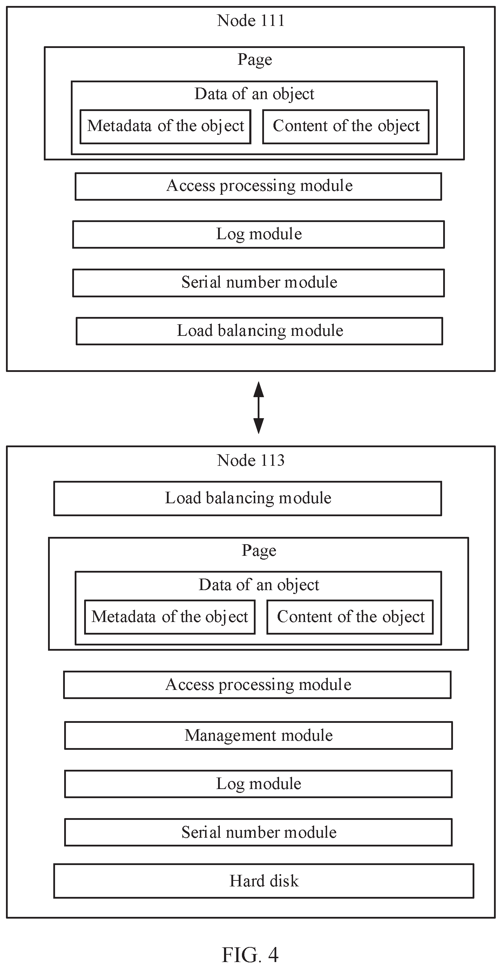

In some embodiments, as shown in FIG. 4, the data of the object may be stored in a page. When the object is a file, metadata of the file and content of the object may be respectively stored in different pages. The page is located in a node, and that the management node records the node that stores the data of the object specifically may be that the management node records the node including the page in which the data of the object is located. That the node obtains the data of the object from another node specifically may be that the node obtains the page in which the object is located from the other node.

As described above, a page is used to logically store data, and data in the page is specifically stored in a physical storage address associated with the page. That the page is located in a node specifically refers to that the page is associated with a physical storage address of the node. That a current node obtains a page from another node specifically refers to obtaining data of the page from the physical storage address that is in the other node and associated with the page, associating the page with a physical storage address in the current node, and storing the obtained data of the page to the physical storage address that is in the current node and associated with the page.

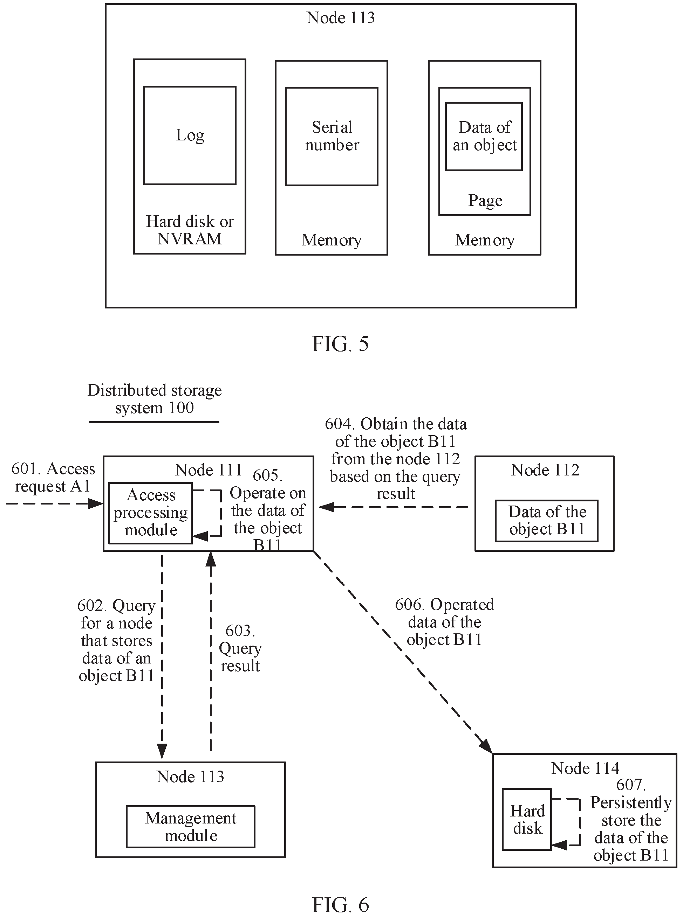

In an example of this embodiment, as shown in FIG. 5, the physical storage address associated with the page is specifically a memory address. In other words, the data in the page is specifically stored in a memory of the node. The memory address is an address in the memory. That the data is stored in the memory may also be referred to as that the data is cached in the memory. The page may be associated with memory addresses of a plurality of nodes in the distributed storage system 100, and the page may be distributed in the plurality of nodes.

An identifier of the page is globally unique in the distributed storage system 100. In other words, in the distributed storage system 100, a unique page may be determined based on the identifier of the page. The identifier of the page is associated with an identifier of the node in which the page is located. In this way, the node in which the page is located may be identified based on the identifier of the page. When a plurality of nodes have the page in which the data of the object is located, the node obtains a page in which the latest data of the object is located. In other words, that the other node obtains the data of the object is specifically obtaining the page from a node including the page in which the latest data of the object is located. The identifier of the object is associated with an identifier of the page in which the data of the object is located, and the page in which the data of the object is located may be found based on the identifier of the object.

In some embodiments, the page may be associated with a hard disk address of a node, where the hard disk address is an address in a hard disk. The data in the page is persistently stored in the hard disk address. The node may be referred to as a home node of the page, or may be referred to as a home node of the data in the page. The node is specifically a storage node in the distributed storage system 100.

In some embodiments, as shown in FIG. 4, the node may include a log module and a serial number module. The log module is configured to generate a log for an operation performed on an object. The log may be a write-ahead log (write-ahead log, WAL). The serial number module is configured to generate a serial number for the log generated by the log module. As shown in FIG. 5, the log generated by the log module may be stored in a hard disk to implement persistent storage. In addition, when the memory of the node includes an NVRAM, the log may be stored in the NVRAM to implement persistent storage. The serial number of the log may be stored in the memory, to facilitate invocation by a processor. The log and the serial number of the log are described in detail below, and details are not described herein.

The foregoing describes the distributed storage system 100 according to an embodiment of this application. The following describes, with reference to the distributed storage system 100, a method for processing data according to an embodiment of this application.

Refer to FIG. 6. It may be set that in step 601, a node 111 receives an access request A1. The node 111 may be any node in the nodes configured to process an access request in the distributed storage system 100.

In some embodiments, the node 111 may be an access node of the access request A1. In the case shown in FIG. 1A, that is, in the case that the node 111 is a storage node in the distributed storage system 100 and the nodes configured to process an access request are storage nodes, the node 111 may receive the access request A1 from a compute node of the distributed storage system 100, or may receive the access request A1 from an external compute device of the distributed storage system 100. In the case shown in FIG. 1B, that is, in the case that the distributed storage system 100 includes compute nodes and storage nodes, and the compute nodes and the storage nodes may all be configured to process an access request, if the node 111 is a compute node, the node 111 may receive an operation sent by a user, and generate the access request A1 based on the operation sent by the user. In other words, when the node 111 is a compute node, that the node 111 receives the access request A1 specifically refers to that the node 111 receives the operation of the user, and generates the access request A1 based on the operation of the user. Alternatively, if the node 111 is a compute node or a storage node, the node 111 may receive the access request A1 from an external compute device of the distributed storage system 100.

The access request A1 includes an object indication B1 and an operation indication C1. The object indication B1 indicates an accessed object of the access request A1. It may be set that the object indication B1 indicates an object B11 in a directory B, and in this case, the accessed object of the access request A1 is the object B11. In some embodiments, the object indication B1 may include an identifier of the directory B and an identifier of the object B11. The operation indication C1 indicates an operation to be performed on the accessed object of the access request A1 based on the access request A1. In other words, the operation indication C1 indicates an operation to be performed on the object B11.

Still refer to FIG. 6. In step 602, the node 111 may query for a node that stores data of the object B11.

The node 111 may first locally query for the data of the object B11, that is, first determine whether the node 111 stores the data of the object B11. If the node 111 stores the data of the object B11, the node 111 may operate, based on the operation indication C1, the data of the object B11 stored in the node 111. In some embodiments, if the node 111 stores the data of the object B11, and the data of the object B11 stored in the node 111 is the latest data of the object B11, the node 111 may operate, based on the operation indication C1, the data of the object B11 stored in the node 111. Determining whether the data of the object B11 stored in the node 111 is the latest data is specifically described below. Details are not described herein.

If the node 111 does not store the data of the object B11 or the data of the object B11 stored in the node is not the latest data of the object B11, the node 111 may query, in a management node of the direction B based on the object indication B1, for a node that stores the data of the object B11. As described above, the object indication B1 includes the identifier of the directory B, and the identifier of the directory B is associated with the management node of the directory B. In this way, the node 111 may obtain the management node of the directory B based on the identifier of the directory B.

As shown in FIG. 6, it may be set that the management node of the directory B is a node 113. The node 111 may query, in the node 113, for the node that stores the data of the object B11. When the node that stores the data of the object B11 is found, the node 111 may obtain the data of the object B11 from the node. It may be set that it is found that a node 112 stores the data of the object B11, and in this case, the node 111 may obtain the data of the object B11 from the node 112.

In some embodiments, the node 111 may send a query request to the node 113 based on the object indication B1, where the query request includes the identifier of the object B11. The node 113 may query, based on the identifier of the object B11, for the node that stores the data of the object B11. When finding that the node 112 stores the data of the object B11, in step 603, the node 113 may send a query result to the node 111, where the query result includes an identifier of the node 112. For example, the identifier of the node 112 may be a network address of the node 112, for example, an internet protocol (internet protocol, IP) address. The node 111 may obtain the data of the object B11 from the node 112 based on the query result. Specifically, the node 112 may be identified based on the identifier of the node in the query result, and the data of the object B11 may be obtained from the node 112.

As described above, a cache node of the object B11 and a home node of the object B11 belong to the node that stores the data of the object B11. If the node that stores the data of the object B11 and that is found in the node 113 by the node 111 includes the cache node of the object B11 and the home node of the object B11, in this case, the node 111 obtains the data of the object B11 from the cache node of the cache node of the object B11.

The cache node of the object B11 caches the data of the object B11 in a memory. As a result, the data of the object B11 may be lost from the memory. For example, when a lifecycle of the data of the object B11 in the memory ends or the cache node is powered off and restarted, the data of the object B11 is lost from the memory. After the data of the object B11 is lost from the memory of the cache node of the object B11, the cache node is no longer the cache node of the object B11. Therefore, it is possible that the distributed storage system 100 does not have the cache node of the object B11 and has only the home node of the object B11. In this case, the node that stores the data of the object B11 and that is found in the node 113 by the node 111 is the home node of the object B11, and the node 111 obtains the data of the object B11 from the home node of the object B11.

In some embodiments, the node 112 stores the latest data of the object B11, and the node 111 obtains the latest data of the object B11 from the node 112. In other words, when the data of the object B11 stored in the node 112 is the latest data of the object B11, the node 111 obtains the data of the object B11 from the node 112.

The distributed storage system 100 may have a plurality of cache nodes of the object B11. For example, recently, a plurality of nodes obtain and cache the data of the object B11 because the plurality of nodes process access requests for the object B11, and the nodes become the cache nodes of the object B11. The node 111 may query, in the plurality of cache nodes, for a node that stores the latest data of the object B11.

The management node of the directory B1, that is, the node 113, may record a status of the data of the object B11 in each cache node of the object B11, where the status of the data may reflect whether the data is the latest data. The node 113 may record the status of the data of the object B11 in each cache node based on a cache coherence protocol.

In some embodiments, the cache coherence protocol used by the node 113 may be an MESI (modified exclusive shared or invalid) protocol. The MESI protocol classifies data in a memory into four states, which are respectively: a modified (modified, M) state, an exclusive (exclusive, E) state, a shared (shared, S) state, and an invalid (invalid, I) state.

If the data of the object B11 cached by a node is in the M state, it indicates that the data of the object B11 is exclusively occupied by the node, the data of the object B11 cached by the node is dirty (in other words, the data of the object B11 cached by the node is different from data of the object B11 that has been persistently stored, or the data of the object B11 cached by the node has not been persistently stored), and the data of the object B11 cached by other nodes is in the I state.

If the data of the object B11 cached by a node is in the E state, it indicates that the data of the object B11 is exclusively occupied by the node, the data of the object B11 cached by the node is clean (in other words, the data of the object B11 cached by the node is the same as data of the object B11 that has been persistently stored, or the data of the object B11 cached by the node has been persistently stored), and the node can read and write the data of the object B11. If the data of the object B11 is in the E state, it may be considered that the data of the object B11 is the latest data.

If the data of the object B11 cached by a node is in the S state, it indicates that the data of the object B11 cached by the node is clean and a plurality of nodes share the data. If the data of the object B11 is in the S state, it may be considered that the data of the object B11 is the latest data.

If the data of the object B11 cached by a node is in the I state, it indicates that the data of the object B11 cached by the node has been or is being modified by another node, and is invalid data.

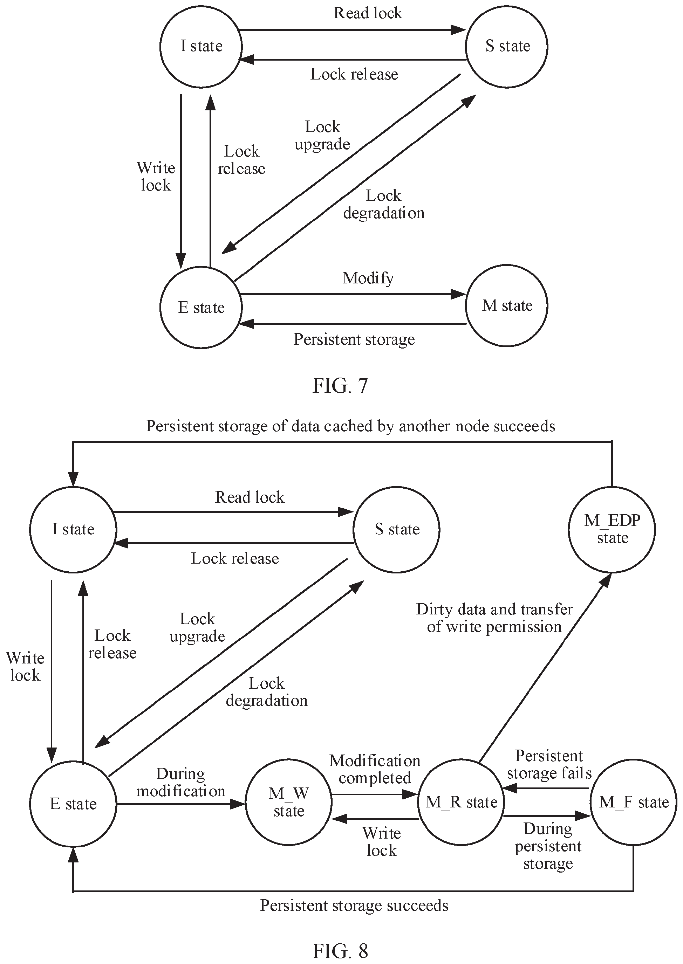

The status of the data of the object B11 cached by each node may change. As shown in FIG. 7, when the data of the object B11 cached by a current node is in the E state, the current node may modify the data of the object B11, so that the data of the object B11 cached by the current node enters the M state. When the data of the object B11 cached by the current node is in the M state and the data of the object B11 cached by the current node has been persistently stored, the data of the object B11 cached by the current node enters the E state. When the data of the object B11 cached by the current node is in the E state, it indicates that a read lock and a write lock are applied to the data of the object B11 cached by the node. When another node needs to read the data of the object B11, the current node releases the write lock on the data of the object B11 and retains the read lock on the data of the object B11, and the data of the object B11 cached by the current node enters the S state. The operation of releasing the write lock on the data and retaining the read lock on the data may be referred to as lock degradation. If the data of the object B11 cached by the current node is in the E state and another node needs to modify the data of the object B11, the current node may release the read lock and the write lock, and the data of the object B11 cached by the current node enters the I state. If the data of the object B11 cached by the current node is in the S state and the current node needs to modify the data of the object B11, the current node may add a write lock, and the data of the object B11 cached by the current node enters the E state. If the data of the object B11 cached by the current node is in the I state and the current node needs to modify the data of the object B11, the current node may obtain the data of the object B11 cached by another node or obtain the data of the object B11 from a hard disk, cache the obtained data of the object B11, and add a write lock to the data of the object B11, and the data of the object B11 cached by the current node enters the E state. If the data of the object B11 cached by the current node is in the I state and the current node needs to read the data of the object B11, the current node may obtain the data of the object B11 cached by another node or obtain the data of the object B11 from a hard disk, cache the obtained data of the object B11, and add a read lock to the data of the object B11, and the data of the object B11 cached by the current node enters the S state.

Each node may record the status of the data of the object B11 cached by the node, and the node may notify the node 113 of the status of the data of the object B11. The node 113 may record the status of the data of the object B11 cached by the node. The status of the data is a state in the M state, the E state, the S state, and the I state.

When the node 111 processes the access request A1 and the node 111 caches the data of the object B11, if the data of the object B11 in the node 111 is in the S state or the E state, it indicates that the data of the object B11 cached by the node 111 is the latest data of the object B11, and the node 111 may operate on the cached data of the object B11. If the data of the object B11 cached by the node 111 is in the M state, the node 111 operates on the cached data of the object B11 when the data of the object B11 changes to the E state or the S state. In other words, when the data of the object B11 in the node 111 is in the S state, the E state, or the M state, the node 111 does not need to obtain the data of the object B11 from another node.

When the node 111 does not cache the data of the object B11 or when the data of the object B11 cached by the node 111 is in the I state, the node 111 queries, in the node 113, for a node in which the cached data of the object B11 is in the E state or the S state, and obtain the data of the object B11 from the found node.

If it is found in the node 113 that a node (for example, the node 112) in which the cached data of the object B11 is in the M state, the node 111 obtains the data of the object B11 from the node 112 when the data of the object B11 cached by the node 112 enters the E state or the S state.

In addition, it can be learned from the foregoing descriptions that, when the data of the object B11 cached by a node is in the M state, the node 111 can obtain the data of the object B11 only after the data of the object B11 in the M state has been persistently stored. It takes long time (usually milliseconds or even seconds) to persistently store data. In this case, the following provides an improved MESI protocol.

Refer to FIG. 8. In the improved MESI protocol, four states are added, which are respectively an M_R state, an M_F state, an M_EDP state, and an M_W state. The four states are obtained by splitting the M state in the original MESI protocol, and may be referred to as four sub-states of the M state. By using the four sub-states, when the current node (for example, the node 112) is operating on the data of the object B11, the node 111 may obtain the data of the object B11 from the node 112. Details are as follows:

When the data of the object B11 cached by the node 112 is in the M_W state, it indicates that the node 112 is modifying the data of the object B11. In this case, the data of the object B11 cannot be persistently stored, cannot be read or written by another node, and can be read or written only by the node 112.

When the node 112 completes modification of the data of the object B11, the data of the object B11 cached by the node 112 enters the M_R state. When the data of the object B11 cached by the node 112 is in the M_R state, it indicates that the node 112 has modified the data of the object B11 but still does not persistently store the data of the object B11. In this case, the data of the object B11 cached by the node 112 is data that has been modified by the node 112. In other words, the data of the object B11 has been recently modified, and is the latest data of the object B11. Because the data of the object B11 cached by the node 112 has not been persistently stored, the data of the object B11 cached by the node 112 in this case is dirty data.

When the node 112 starts to persistently store the data of the object B11, the data of the object B11 cached by the node 112 enters the M_F state from the M_R state. When the data of the object B11 cached by the node 112 is in the M_F state, it indicates that the node 112 is persistently storing the data of the object B11.

If persistent storage of the data of the object B11 fails, the data of the object B11 cached by the node 112 returns from the M_F state to the M_R state.

In addition, when the data of the object B11 cached by the node 112 is in the M_R state, if the node 112 needs to modify the data of the object B11 again, the data of the object B11 cached by the node 112 enters the M_W state. When modification is completed again, the data of the object B11 cached by the node 112 enters the M_R state.

When the data of the object B11 cached by the node 112 is in the M_R state, if the node 111 requests to obtain the data of the object B11, the data of the object B11 cached by the node 112 enters the M_EDP state. When the data of the object cached by the node 112 is in the M_EDP state, the node 111 may obtain the data of the object B11 cached by the node 112. In this case, the data of the object B11 is dirty data. In addition, when the data of the object cached by the node 112 is in the M_EDP state, the node 111 may apply a write lock to the data of the object B11, and the node 112 releases the write lock on the data of the object B11, to complete transfer of write permission of the data of the object B11 from the node 112 to the node 111. In addition, when the data of the object B11 cached by the node 112 is in the M_EDP state, the node 112 cannot read or write the data of the object B11, and when the data of the object B11 cached by the node 111 has been persistently stored, the data of the object B11 cached by the node 112 enters the I state.

In some embodiments, when the data of the object B11 cached by the node is in the M_F state, in other words, when the node 112 is persistently storing the data of the object B11, if the node 111 requests to obtain the data of the object B11, the node 112 may cancel object storage and persistent storage of the data of the object B11, in other words, cancel disk flushing. After the disk flushing is canceled, the data of the object B11 in the node 112 enters the M_R state, and then enters the M_EDP state from the M_R state.

In some embodiments, when the data of the object B11 cached by the node is in the M_F state, in other words, when the node 112 is persistently storing the data of the object B11, if the node 111 requests to obtain the data of the object B11, the node 112 may copy the data of the object B11, to obtain two copies of data of the object B11. One copy thereof is used by the node 112 to persistently store the data of the object B11, and the other copy is sent to the node 111 for use by the node 111.

In this way, by using the MESI protocol or the improved MESI protocol, it can be ensured that the node 111 obtains the latest data of the object B11.

In some embodiments, the node caches the data of the object B11 by using a page. In other words, the data of the object B11 cached by the node is located in a page. For ease of description, the page in which the data of the object B11 is located may be referred to as a page B12. The page B12 may be one or more pages. Specifically, when a data amount of the data of the object B11 is less than or equal to a data amount that can be accommodated by the page, the data of the object B11 may be located in one page. When the data amount of the data of the object B11 is less than the data amount that can be accommodated by the page, the page may further accommodate data of another object in addition to accommodating the data of the object B11. When the data amount of the data of the object B11 is greater than the data amount that can be accommodated by the page, the data of the object B11 may be stored by a plurality of pages. In other words, the data of the object B11 is located in a plurality of pages.

As described above, a page has a globally unique identifier in the distributed storage system 100, an identifier of an object is associated with an identifier of a page in which the data of the object is located, and the management node records a node including the page in which the data of the object is located. In this way, in step 602, the node 111 may query, in the node 113 based on the identifier of the object B11, for a node having the page B12 (that is, the page in which the data of the object B11 is located). The query result of step 603 may be an identifier of the node having the page B12. It may be set that the node having the page B12 is the node 112. In this way, in step 604, the node 111 may obtain the page B12 from the node 112 based on the identifier of the node 112. After the page B12 is obtained, the data of the object B11 may be obtained from the page B12.

In some embodiments, in step 602, the node 111 may find, in the node 113 based on the identifier of the object B11, an identifier of the page (that is, an identifier of the page B12) in which the data of the object B11 is located. In an example, the page in which the data of the object B11 is located may be queried for based on an index structure of the directory B. Specifically, an identifier of a page may be used as a value (value) stored in the index structure, and an identifier of an object may be used as a key (key) stored in an index node. Therefore, the identifier of the page may be queried for in the index node based on the identifier of the object. The identifier of the page is associated with a key range, the key range includes one or more keys, and the key is an identifier of an object. More specifically, a magnitude of a key of an object is indicated by a magnitude ranking that is in a lexicographical order and that corresponds to an identifier of the object. In the index structure of the directory B, query is performed by using a key of the object B11, to obtain an identifier of a page associated with a key range to which the object B11 belongs. The identifier of the page associated with the key range is an identifier of a page associated with the object B11, that is, the identifier of the page B12. After the identifier of the page B12 is found, in step 602, the node having the page B12 may be queried for based on the identifier of the page B12.

A plurality of nodes may have the page B12, and the node 111 may query, in the node 113, for a node having the latest page B12. The latest page 12 is data obtained by completing the latest modification operation on the page. The modification operation for the page is specifically a modification operation on data in the page. The node 113 may record a status of the page B12 in each node, and the status of the page B12 in the node may reflect whether the page B12 in the node is the latest page. The node 113 may record the status of the page B12 in each node based on a cache coherence protocol. In some embodiments, the cache coherence protocol may be the MESI protocol described above or the improved MESI protocol described above. With reference to the foregoing manners in which the node causes the data of the object B11 to enter different states, the node may cause the page B12 to enter different states, and notify the node 113 of the states. Details are not described herein again.

In this way, it can be ensured that the node 111 obtains the latest page B12, and further obtains the latest data of the object B11 from the page B12.

As described above, a page is associated with a memory address of a node, and data in the page is specifically stored in a memory associated with the page. The management node may record a node having the page and a memory address that is in the node and that is associated with the page. In step 602, the node 111 may find, in the node 113, the node having the page B12 and a memory address that is in the node and that is associated with the page B12. It may be set that the node having the page is the node 112. In step 604, the node 111 may obtain data in the page B12 from the memory address that is in the node 112 and that is associated with the page B12. After obtaining the data in the page B12, the node 111 may associate the page B12 with a memory address in the node 111, and store the obtained data in the page B12 to the memory address that is in the node 111 and that is associated with the page B12.

In some embodiments, the page in which the data of the object is located may be further associated with a hard disk address in a home node of the object, and the address is used to persistently store the data of the object. The management node may record the home node of the object and the hard disk address that in the home node of the object and that is associated with the page. When the distributed storage system 100 does not have the cache node of the object B11 (that is, no memory address of a node is associated with the page B12), or when data of the object B11 in all cache nodes of the object B11 is in an invalid state (for example, the I state described above), the node 111 may find, in the node 113, the home node of the object B11 and a hard disk address that is in the home node of the object B11 and that is associated with the page B12. It may be set that the home node of the node object B11 is a node 114, and the node 111 may obtain, based on the query result, the data in the page B12 from a hard disk address that is in the node 114 and that is associated with the page B12. After obtaining the data in the page B12, the node 111 may associate the page B12 with a memory address in the node 111, and store the obtained data in the page B12 to the memory address that is in the node 111 and that is associated with the page B12.

In the foregoing manner, the node 111 may obtain the data of the object B11. When the node 111 obtains the data of the object B11, the node 111 becomes a cache node of the object B11.

After the node 111 obtains the data of the object B11, the node 113 may record that the node 111 stores the data of the object B11. For example, after obtaining the data of the object B11, the node 111 may send a notification to the node 113, where the notification indicates that the node 111 obtains the data of the object B11. The node 113 may record, based on the notification, that the node 111 stores the data of the object B11.

Next, the node 111 may perform step 605 of operating on the data of the object B11 based on the operation indication C1.

As described above, the data of the object B11 may be metadata of the object B11. The operation indicated by the operation indication C1 (that is, an operation to be performed on the object B11) may include a metadata-type operation, for example, creating or deleting the object B11 in the directory B, renaming (rename) the object B11, creating or deleting a hard link (hard link), creating or deleting a symbolic link (sym link), getting an attribute (get attribute), setting an attribute (set attribute), and the like. The metadata-type operation on the object B11 relates to operating on a dentry table and an inode table of the directory B. For example, when the object B11 is created, a dentry of the object B11 needs to be inserted into the dentry table of the directory B, and an inode of the object B11 needs to be inserted into the inode table. For another example, when the object B11 is renamed, the dentry of the object B11 needs to be modified in the dentry table of the directory B, the inode of the object B11 needs to be modified in the inode table, and the like.

When the object B11 is a file, the operation indicated by the operation indication C1 may alternatively include a data-type operation, for example, a file read operation and a file modify operation. The file modify operation includes writing data into content of the file or deleting data from content of the file. The data-type operation on the object B11 involves content of the object B11 and an inode of the object B11. When the content of the object B11 is modified, the inode of the object B11 needs to be modified. For example, when the content of the object B11 is modified, metadata such as modification time (mtime) and a file size (size) in the inode of the object B11 needs to be modified. Atomicity needs to be ensured when the content of the object B11 is modified and the inode of the object B11 is modified. If the atomicity is not ensured, actual metadata of the object 11 may be inconsistent with the metadata in the inode of the object B11.

In some operations, for example, a modify operation or a create operation, data writing may need to be performed. This type of operation can be performed in two execution manners: synchronous writing and asynchronous writing. The synchronous writing refers to that an execution result is returned only after persistent storage of written data is completed. The asynchronous writing means that an execution result can be returned without a need to complete persistent storage of written data. In the synchronous writing execution manner, persistent storage of data needs to be first completed, and an execution result is then returned, leading to poor user experience. In the asynchronous writing, an execution result can be returned quickly, bringing good user experience. However, in the asynchronous writing, an execution result is returned before persistent storage of data is completed. Compared with the synchronous writing, the asynchronous writing has poor reliability.

In some embodiments, when the operation indication C1 indicates a metadata-type operation and the indicated operation requires data writing, the node 111 may perform the operation indicated by the operation indication C1 in the synchronous writing manner. This is because data written by the metadata-type operation is metadata, which usually has a small data amount and requires short time for persistent storage. The metadata-type operation is performed in the synchronous writing manner, so that both user experience and reliability can be ensured.

In some embodiments, when the operation indication C1 indicates a data-type operation and the indicated operation requires data writing, the node 111 may perform the operation indicated by the operation indication C1 in the asynchronous writing manner. This is because data written by the data-type operation includes content of a file, which usually has a large data amount and requires long time for persistent storage. The data-type operation is performed in the asynchronous writing manner, so that user experience can be ensured.

The operation indication C1 may indicate a metadata-type operation. When the object B11 is a file, the operation indication C1 may alternatively indicate a data-type operation. The following describes a process that the node 111 operates on the data of the object B11 based on the operation indication C1 by using examples.

In some embodiments, the operation indication C1 indicates to create the object B11. In other words, based on the access request A1, the operation to be performed on the object B11 is specifically creating the object B11 in the directory B.

In this embodiment, in step 602, a node in which a page used to store the data of the object B11 is queried for. The page used to store the data of the object B11 may also be referred to as the page B12. The data of the object B11 includes the dentry of the object B11 and the inode of the object B11. The dentry of the object B11 needs to be inserted into the dentry table of the directory B, and the inode of the object B11 needs to be inserted into the inode table of the directory B. The page B12 includes a page used to store the dentry of the object B11 and a page used to store the inode of the object B11. For ease of description, the page used to store the dentry of the object B11 may be referred to as a page B121, and the page used to store the inode of the object B11 may be referred to as a page B122.

In an example, if the dentry table of the directory B is stored in one page, the page B121 is specifically the page in which the dentry table of the directory B is located.

In an example, if the dentry table of the directory B is stored in a plurality of pages, the page B121 may be one of the plurality of pages. In step 602, the page B121 may be queried for in the plurality of pages. Usually, in the dentry table of the directory B, an arrangement ranking of a dentry of an object and a magnitude ranking of a key of the object are consistent, where a magnitude of an identifier of the object may be indicated by a magnitude ranking that is in a lexicographical order and corresponds to the identifier. In this way, based on a magnitude of the key of the object B11, the page B121 is queried for in the plurality of pages. Specifically, one page corresponds to one key range, and the key range includes a plurality of keys. The page is used to store dentries of objects whose keys fall within the key range. In step 602, the page B121 may be queried for based on the index structure of the directory B. Specifically, an identifier of a page may be used as a leaf node in an index structure, the identifier of the page is associated with a key range, the key range includes one or more keys, and the key is an identifier of an object. In the index structure of the directory B, query is performed by using the key of the object B11, to obtain an identifier of a page associated with a key range to which the object B11 belongs. The identifier of the page associated with the key range is an identifier of the page B121. After the identifier of the page B121 is found, in step 602, the node 111 may query, based on the identifier of the page B121, for a node having the page B121. Then, in step 604, the node 111 may obtain the page B121. For details, refer to the foregoing descriptions, which are not described herein again.

With reference to the manner of obtaining the page B121, the node 111 may obtain the page B122. Details are not described herein again.

In step 605, the node 111 may generate the data of the object B11 based on the operation indication C1, and store the data of the object B11 to the page 12.

Metadata of the object B11 may be generated, where the metadata includes an object number, a name, an inode ID, access permission, a creation date, and a size of the object B11. The dentry of the object B11 may be generated based on metadata used to form a dentry, such as the object number, the name, and the inode ID of the object B11. In addition, the inode of the object B11 may be generated based on metadata used to form an inode, such as the access permission and the creation date of the object B11. The node 111 stores the dentry of the object B11 to the page B121, and stores the inode of the object B11 to the page B122.

In some embodiments, when the node 111 is a storage node, the access request A1 is received by the node 111 from a compute node D1 in the distributed storage system 100, and the operation indication C1 indicates that a read operation needs to be performed on the object B11. In other words, the compute node D1 needs to obtain the data of the object B11. When the node 111 obtains the data of the object B11, in step 605, the node 111 sends the obtained data of the object B11 to the compute node D1, so that the compute node D1 obtains the data of the object B11.

In some embodiments, the operation indication C1 indicates that a modify operation needs to be performed on the object B11. In step 605, the node 111 modifies the data of the object B11 based on the operation indication C1. The node 111 caches modified data of the object B11.

In an example, the operation indication C1 may indicate to modify the name of the object B11, the data of the object B11 specifically may be the dentry of the object B11, and the node 111 may modify the dentry of the object B11 based on modification of the name of the object B11. In an example, the operation indication C1 may indicate to modify the access permission of the object B11, the data of the object B11 specifically may be the inode of the object B11, and the node 111 may modify the inode of the object B11 based on modification of the permission of the object B11. In an example, the object B11 is a file, the operation indication C1 may indicate to modify the content of the object B11, and the data of the object B11 includes the content of the object B11 and the inode of the object B11. The node 111 may modify the content of the object B11 and the inode of the object B11 based on the operation indication C1.

The foregoing examples describe operations performed by the node 111 on the data of the object B11, but are not exhaustive. In other embodiments, the node 111 may further perform other operations on the object B11, which are not enumerated one by one herein.

Therefore, the node 111 may complete an operation on the data of the object B11.

The processing process on an access request may be classified into semantic processing and data processing. The semantic processing may also be referred to as a semantic operation, and refers to obtaining executable information of a node based on information about an upper-layer application in the access request, to facilitate data processing on data of an object. Specifically, the semantic processing includes identifying an accessed object of the access request by a node based on an object indication in the access request, identifying a storage position of data of the accessed object, and the like. The data processing is also referred to as a data operation, and refers to an operation by the node on the data of the accessed object, for example, an object modify operation, an object read operation, or an object create operation described above.

In some embodiments, after completing the operation on the data of the object B11, the node 111 may initiate persistent storage of the data of the object B11. For ease of description, data that is of the object B11 and that is operated by the node 111 based on the operation indication C1 may be referred to as operated data of the object B11. The node 114 may be set as a node configured to persistently store the object B11.

In some embodiments, the node 113 records the node configured to persistently store the object B11. In an example of this embodiment, the node configured to persistently store the object B11 may be the home node of the object B11.

When it is found that the node 114 is the node configured to persistently store the object B11, in step 606, the node 111 may send the operated data of the object B11 to the node 114. In step 607, the node 114 may persistently store the operated data of the object B11.

In some embodiments, the node 114 is the home node of the object B11. In other words, a hard disk of the node 114 is configured to store data of an object. In this embodiment, the node 114 stores the operated data of the object B11 to the hard disk of the node 114, to persistently store the operated data of the object B11. In some embodiments, the node 114 is not the home node of the object B11, and is only a node configured to persistently store the object B11. In this embodiment, the node 114 may persistently store the operated data of the object B11 to a hard disk of the home node of the object B11. For example, the node 114 may send the operated data of the object B11 to a network adapter of the home node of the object B11, and the network of the home node of the object B11 may directly store the received operated data of the object B11 to the hard disk of the home node.

In this way, the operated data of the object B11 can be persistently stored.

In some embodiments, as described above, a node in the distributed storage system 100 has a log module and a serial number module. The log module is configured to generate a log for an operation, and the operation may be an operation performed on an object. For ease of description, a log generated for an operation performed on an object is referred to as a log of the object. The serial number module is configured to generate a serial number for a log. Each time when an operation is performed on an object, a log of the object may be generated. The serial number of the log is also referred to as a number of the log, and indicates a generation ranking of the log. The serial number of the log may be recorded in the log.

The log of the object includes data of the object, and is specifically data obtained by performing the operation on the object. For example, the node 111 operates on the data of the object B11, to obtain the operated data of the object B11. A log module in the node 111 generates a log b1 for the data of the object B11 operated by the node 111 currently. In this case, the log b1 includes the operated data of the object B11. As described above, a cache node of an object caches data of the object in a memory. The latest data of the object may be a single copy, in other words, only one node may cache the latest data of the object. If the node is faulty or the node is powered off and restarted, the data of the object may be lost. The data of the object in the log is used to restore the lost data of the object.

To ensure log generation efficiency, each node has a log module and a serial number module. The log module in the node is configured to generate a log for an operation performed by the node on the object, and the serial number module in the node is configured to generate a serial number for the log generated by the node. Therefore, a plurality of nodes may store logs of the same object. Data of the object in a recently generated log is the latest data of the object, and when the lost data of the object is restored, the recently generated log of the object needs to be used. To identify generation rankings of logs of the same object in different nodes, serial numbers of the logs of the same object need to maintain global increment. In other words, no matter which node performs an operation on the object recently, a serial number of a log generated for the operation recently performed on the object is the largest serial number of the logs of the object. Global increment of serial numbers can be implemented in the following two manners.

In one manner, global serial numbers are used. For example, nodes perform related operations by using a global clock. In other words, clocks used by different nodes in the distributed storage system 100 are the same. In this way, a serial number module in the node may generate a serial number for a log based on time at which the node performs an operation on an object. In this way, it is ensured that execution time of the operation on the object is consistent with a magnitude of the serial number of the log generated for the operation.

In another manner, as described above, a node obtains data of an object from another node. When obtaining the data of the object from the other node, the node also obtains a serial number of a log of the object, and then generates a serial number of a log in this node based on the serial number of the log obtained from the other node, so that the serial number of the log in this node is greater than the serial number of the log obtained from the other node, thereby implementing global increment of serial numbers. For example, when the node 111 obtains the data of the object B11 from the node 112, the node 111 obtains, from the node 112, a serial number of a log of the object B11 in the node 112. When the node 112 has a plurality of logs of the object B11, the node 111 obtains a serial number of a log with the largest serial number in the plurality of logs. The node 111 operates on the data of the object B11, and generates the log b1 of the object B11 for the operation. A serial number module in the node 111 generates a serial number of the log b1 based on the serial number obtained by the node 111 from the node 112. Specifically, the serial number module in the node 111 may first generate the serial number for the log b1, and compare the generated serial number with the serial number obtained from the node 112. If the generated serial number is less than or equal to the serial number obtained by the node 111 from the node 112, the serial number obtained from the node 112 is increased by 1, and an obtained result is used as the serial number of the log b1. If the generated serial number is greater than the serial number obtained by the node 111 from the node 112, the generated serial number is used as the serial number of the log b1.

In this way, when a node loses the latest data of an object, the node may restore the latest data of the object based on the latest log of the object. The latest log of the object is a log with the largest serial number in all logs of the object.

In addition, the node may persistently store the log generated by the node, to implement permanent storage of the log. For example, the node may store the log to a hard disk. For another example, when a memory of the node includes an NVRAM, the log may be stored in the NVRAM. The node may cache the serial number of the log in the memory, to facilitate invocation by the node (for example, the serial number of the log is sent to another node).

In some embodiments, as described above, the data of the object is stored in a page, and the operation by the node on the data of the object is operating on data of the object in the page. In this case, the log of the object is a log of the page in which the data of the object is located. Specifically, when operating on the data of the object, the node generates a log for the page in which the object is located and generates a serial number for the log of the page. In addition, based on the execution time of the operation on the object, serial numbers of logs of the page also maintain global increment. For a specific implementation, refer to the foregoing descriptions. Details are not described herein again.

A log of the page includes a serial number of the log, an identifier of the page, operated data of the object, and a position of the operated data of the object in the page. The position of the data in the page may be indicated by a length of the data and an offset address of the data in the page. In this way, when a node loses the latest data of an object, the node may restore the latest data of the object based on the latest log of the page in which the data of the object is located. The latest log of the page is a log with the largest serial number in all logs of the page.

In some embodiments, the access request A1 may have a plurality of accessed objects. In other words, in addition to the object B11, the accessed objects of the access request A1 may include another object. In this way, based on the access request A1, a plurality of objects may be accessed. For processing of the node 111 on the another object, refer to the descriptions of the foregoing processing on the object B11. Details are not described herein again.

In some embodiments, as described above, the node in the distributed storage system 100 has a load balancing module. By using the load balancing module, a node with light load may be selected to process an access request.

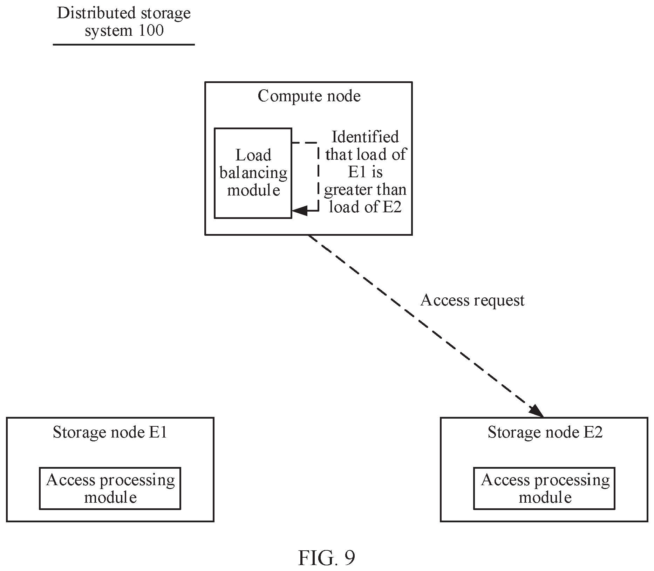

In an example, a storage node in the distributed storage system 100 is configured to process an access request, and a compute node is configured to send the access request to the storage node. In this example, the compute node has a load balancing module, so that a storage node with light load may be selected from the distributed storage system 100, and an access request is sent to the selected storage node. For example, as shown in FIG. 9, when the compute node needs to send an access request to a storage node, if the compute node identifies that load of a storage node E1 is greater than load of a storage node E2, the compute node sends the access request to the storage node E2, so that the storage node E2 processes the access request.

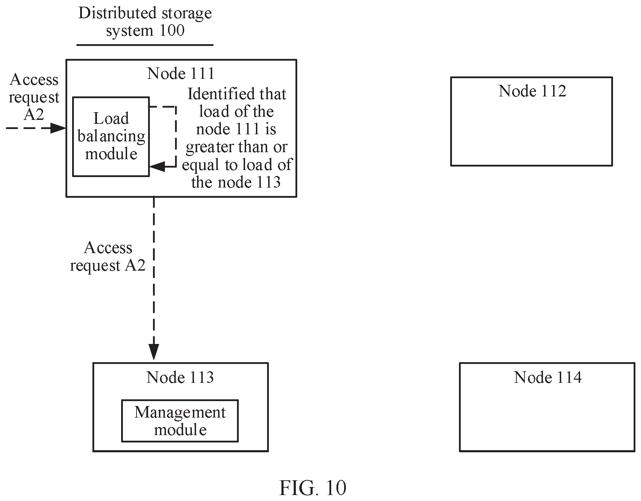

In an example, the node configured to process an access request in the distributed storage system 100 has a load balancing module. When a node configured to process an access request receives the access request, if the node has heavy load, the node may select, by using a load balancing module, a node with light load from the nodes configured to process an access request, and forward the access request to the selected node. For example, when receiving an access request A2, the node 111 may compare load of the node 111 with load of another node, and when the load of the node 111 is greater than the load of the other node, forward the access request A2 to the other node. In an example, as shown in FIG. 10, when receiving the access request A2, the node 111 preferentially compares the load of the node 111 with load of a management node of the access request A2, where the management node of the access request A2 is a management node, for example, the node 113, of an accessed object of the access request A2. In this way, when the load of the management node of the access request A2 is less than or equal to load of an access node of the access request A2, the management node of the access request A2 processes the access request. The management node processes the access request, and the management node may query, in the management node, for a node that stores data of the accessed object, thereby improving query efficiency.

In some embodiments, as described above, one or more nodes in the distributed storage system 100 are used as a policy control node. The policy control node has a policy control module. By using the policy control module, the policy control node may control a load balance policy, to control the load balance policy used by the node in the distributed storage system 100 to forward the access request. Control of the load balance policy includes load identification and policy formulation. Details are as follows.

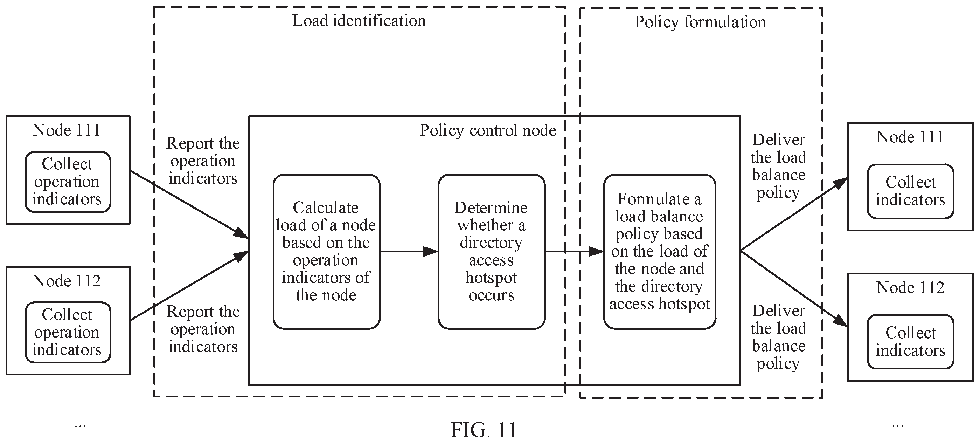

Refer to FIG. 11. Each node like a node 111 or a node 112 in the distributed storage system 100 may collect operation indicators of the node. The operation indicators of the node are used to calculate load of the node. For example, the indicators used to calculate load include central processing unit (central processing unit, CPU) utilization, memory utilization, and information (for example, a read/write ratio or a random sequence degree) about a workload (workload) model.

The node may report the collected operation indicators to the policy control node. The policy control node may calculate the load of the node based on the operation indicators of the node. In some embodiments, the policy control node may determine, based on the load of the node, whether a directory access hotspot occurs on the node. Specifically, if the policy control node finds that a node has heavy load, the policy control node may further analyze a cause of the heavy load of the node. For example, the policy control node may obtain a log of the node, and analyze the cause of the heavy load of the node based on the log of the node. If the cause of the heavy load of the node is that the node frequently processes access requests for a directory, it indicates that a directory access hotspot occurs on the node. An access request for a directory is an access request for an object in the directory. In other words, the object in the directory is an accessed object of the access request.

In this way, the policy control node may complete load identification. Next, the policy control node may formulate a load balance policy based on a result of load identification, that is, the load of the node and the directory access hotspot.

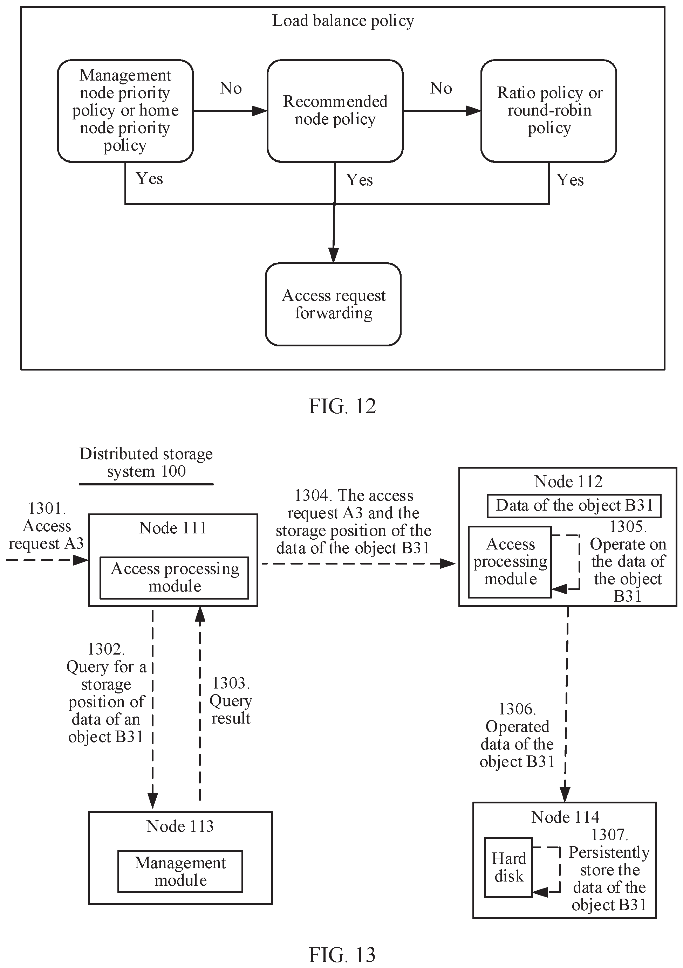

In some embodiments, as shown in FIG. 12, if a load difference between nodes is small, the load balance policy formulated by the policy control node may be a management node priority policy or a home node priority policy. For example, when a difference between load of a node with the largest load and load of a node with the smallest load is less than a preset load threshold Y1, it may be determined that a load difference between nodes is small. For example, the load threshold may be indicated by a percentage of maximum load of nodes. For example, the load threshold Y1 is 5% of the maximum load of the nodes.

The management node priority policy refers to preferentially forwarding an access request to a management node corresponding to the access request, so that the management node processes the access request. The management node corresponding to the access request is a management node of an accessed object of the access request. For example, when load balancing is performed based on the management node priority policy, an access node of the access request may compare load of the access node with load of the management node corresponding to the access request. If the load of the access node is greater than or equal to that of the management node corresponding to the access request, the access node forwards the access request to the management node corresponding to the access request.

The home node priority policy refers to preferentially forwarding the access request to a home node corresponding to the access request, so that the home node processes the access request. The home node corresponding to the access request is a home node of the accessed object of the access request. For example, when load balancing is performed based on the home node priority policy, the access node of the access request may compare the load of the access node with load of the home node corresponding to the access request. If the load of the access node is greater than or equal to that of the home node corresponding to the access request, the access node forwards the access request to the home node corresponding to the access request.

In some embodiments, as shown in FIG. 12, if a node has light load, the load balance policy formulated by the policy control node may be a recommended node policy. According to the recommended node policy, the node with light load is used as a recommended node, so that the access node of the access request forwards the access request to the recommended node when the load of the access node is heavy, so that the recommended node processes the access request. When load of a node is less than a preset load threshold Y2, it may be determined that the load of the node is light. When load of a node is greater than a preset load threshold Y3, it may be determined that the load of the node is heavy. The load threshold Y3 is greater than the load threshold Y2. For example, the load threshold Y2 is 10% of the maximum load, and the load threshold Y2 is 60% of the maximum load. In addition, the policy control node may add an identifier of the recommended node to the recommended node policy. Therefore, when receiving the recommended node policy, the access node of the access request may identify the recommended node based on the identifier of the recommended node.

In some embodiments, if a directory access hotspot occurs on a node, the policy control node may formulate a load balance policy for an access node of the directory. As shown in FIG. 12, the formulated load balance policy may be a ratio policy or a round-robin policy. An access node of a directory is an access node of an access request whose accessed object is an object in the directory. Usually, a node on which a directory access hotspot occurs is the access node of the directory.

According to the ratio policy, the access node of the directory distributes, based on a preset ratio, access requests for the directory that are received within a preset duration to different nodes among a plurality of nodes, so that the different nodes process different access requests for the directory. The access node of the directory may or may not belong to the plurality of nodes. For example, the preset ratio is 20%, and correspondingly, the plurality of nodes are specifically five nodes. For another example, the preset ratio is 10%, and correspondingly, the plurality of nodes are specifically 10 nodes. The access node of the directory may predict, based on a historical frequency of receiving access requests for the directory, a quantity of access requests for the directory that are received within the preset duration, so that the received access requests for the directory may be distributed to different nodes based on the preset ratio. The policy control node may add identifiers of the plurality of nodes to the ratio policy. Therefore, when receiving the ratio policy, the access node of the directory may distribute, based on the identifiers of the plurality of nodes, the access requests for the directory to different nodes among the plurality of nodes.

According to the round-robin policy, the access node of the directory sequentially distributes received access requests for the directory to different nodes among a plurality of nodes, so that the different nodes process different access requests for the directory. To be specific, when an access request for the directory is received, the access request is sent to a node among the plurality of nodes, and when a next access request for the directory is received, the next access request is sent to a next node among the plurality of nodes. The access node of the directory may or may not belong to the plurality of nodes. In addition, the policy control node may add identifiers of the plurality of nodes to the round-robin policy. Therefore, when receiving the round-robin policy, the access node of the directory may sequentially send, based on the identifiers of the plurality of nodes, the access requests for the directory to different nodes among the plurality of nodes.

When formulating the load balance policy, the policy control module may send the formulated load balance policy to a corresponding node, so that the corresponding node may forward an access request based on the load balance policy, to send the access request to another node for processing, thereby implementing load balancing, and avoiding or eliminating access hotspots.

In some embodiments, when the access node of the access request and a cache node of the accessed object of the access request are not the same node, the access node of the access request may forward the access request to the cache node of the accessed object of the access request, so that the cache node of the accessed object of the access request processes the access request, thereby omitting an operation of receiving data from the cache node by a processing node of the access request, and improving efficiency of processing the access request. The access node of the access request may find the cache node of the accessed object of the access request in the management node of the accessed object of the access request, to forward the access request to the cache node.

In some embodiments, the access node of the access request and the cache node of the accessed object of the access request may jointly process the access request, so that load generated by processing the access request is borne by a plurality of nodes, thereby avoiding access hotspots. The following describes the solution of this embodiment with reference to FIG. 13.

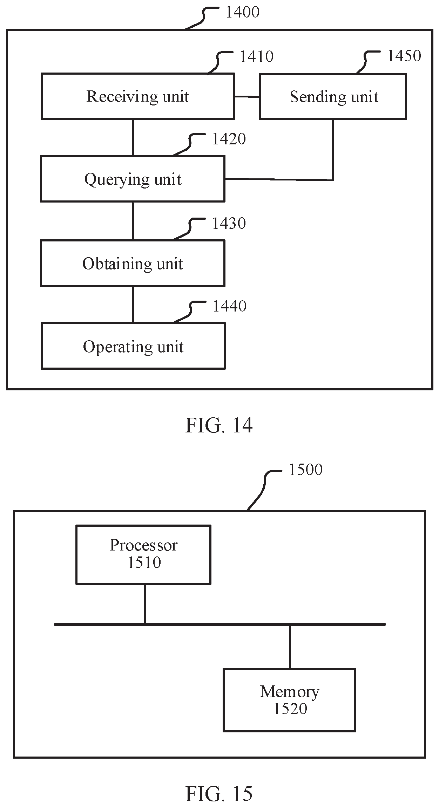

As shown in FIG. 14, in step 1401, a node 111 receives an access request A3. In some embodiments, the node 111 may be an access node of the access request A3.

The access request A3 includes an object indication B3 and an operation indication C3. The object indication B3 indicates an accessed object of the access request A3. It may be set that the accessed object of the access request A3 is an object B31 in a directory B. In this case, the object indication B3 indicates the object B31 in the directory. The operation indication C3 indicates an operation to be performed on the object B3.

The node 111 may perform semantic processing on the access request A3. As described above, the semantic processing may also be referred to as a semantic operation, and refers to obtaining executable information of a node based on information about an upper-layer application in the access request, to facilitate data processing on data of an object.

The semantic processing performed by the node 111 on the access request A3 includes identifying the accessed object of the access request A3 based on the object indication B3. The object indication B3 includes an identifier of the directory B and an identifier of the object B31 in the directory. The node 111 may identify, based on the identifier of the directory B and the identifier of the object B31, that the accessed object of the access request A3 is the object B31 in the directory B.

The semantic processing performed by the node 111 on the access request A3 further includes querying for a storage position of data of the accessed object (that is, the object B31) of the access request A3. As shown in FIG. 13, in step 1302, the node 111 may query, in a node 113, for a storage position of data of the object B31.

In an example, as described above, data of an object is stored in a page. The storage position of the data of the object B31 may be an identifier of a page in which the data of the object B31 is located. The node 113 records the page in which the data of the object B31 is located, and the node 111 may find, in the node 113, the page in which the data of the object B31 is located, to obtain the storage position of the data of the object B31.

In an example, as described above, data of an object is stored in a page, and the data of the object is specifically stored in a memory address associated with the page. The storage position of the data of the object B31 may be a memory address associated with the page in which the data of the object B31 is located. The memory address associated with the page in which the data of the object B31 is located is specifically an address in a memory of a cache node of the object B31. The cache node of the object B31 may be a node 112.

In step 1303, the node 111 obtains a query result from the node 113, where the query result includes the found storage position of the data of the object B31.

Therefore, the node 111 completes the semantic processing on the access request A3.

In step 1304, the node 111 sends the access request A3 and the storage position of the data of the object B31 to the cache node of the object B31, that is, the node 112.

The node 112 may perform data processing on the object B31. Specifically, in step 1305, the node 112 operates on the data of the object B31 based on the access request A3 and the storage position of the data of the object B31. When the storage position is an identifier of a page, the node 112 may identify a memory address associated with the identifier of the page, and operate on the data in the memory address based on the operation indication C3 in the access request A3, to complete an operation on the data of the object B31. When the storage position is a memory address, the node 112 may operate on the data in the memory address based on the operation indication C3, to complete an operation on the data of the object B31.

In some embodiments, after the node 112 completes the operation on the data of the object B31, in step 1306, the node 112 may send operated data of the object B31 to a node 114. In step 1307, the node 114 persistently stores the operated data of the object B31. For details, refer to the foregoing descriptions of step 607. Details are not described herein again.

In conclusion, in the method provided in this embodiment of this application, a node that processes an access request and a node that stores data of an accessed object may not be the same node. When the node that processes the access request and the node that stores the data of the accessed object are not the same node, the node that processes the access request may obtain the data of the accessed object from the node that stores the data of the accessed object, so that the node that processes the access request can complete processing on the access request. In addition, the node that processes the access request and the node that stores the data of the accessed object may be different, thereby avoiding or eliminating problems such as an access hotspot caused by home access of a directory.

Refer to FIG. 14. An embodiment of this application provides an apparatus 1400 for processing data. The apparatus 1400 may be disposed on a first node among a plurality of nodes included in a distributed storage system, objects in a directory are stored in the plurality of nodes, and the objects are subdirectories or files of the directory. As shown in FIG. 14, the apparatus 1400 includes:
a receiving unit 1410, configured to receive a first access request, where the first access request includes a first operation indication and a first object indication, the first object indication indicates a first object in the directory, and the first operation indication indicates an operation to be performed on the first object;
a querying unit 1420, configured to find, based on the first object indication, that a second node among the plurality of nodes stores data of the first object;
an obtaining unit 1430, configured to obtain the data of the first object from the second node; and
an operating unit 1440, configured to operate on the data of the first object based on the first operation indication.

In some embodiments, a third node among the plurality of nodes is configured to record nodes that store data of the objects in the directory; and the querying unit 1420 is configured to find, in the third node based on the first object indication, that the second node stores the data of the first object, where the third node is configured to, after the obtaining unit 1430 obtains the data of the first object, record that the first node stores the data of the first object.

In an example of this embodiment, the apparatus 1400 further includes a sending unit 1450; the receiving unit 1410 is further configured to receive a second access request, where the second access request includes a second operation indication and a second object indication, the second object indication indicates a second object in the directory, and the second operation indication indicates an operation to be performed on the second object; and the sending unit 1450 is configured to send the second operation indication and the second object indication to the third node when load of the first node is greater than or equal to load of the third node, where the third node is configured to obtain data of the second object based on the second object indication, and operate on the data of the second object based on the second operation indication.

In some embodiments, the obtaining unit 1430 is configured to obtain the data of the first object from the second node when the data of the first object stored in the second node is the latest data of the first object.

In some embodiments, the plurality of nodes further include a fourth node configured to persistently store the data of the first object, and the apparatus further includes: the sending unit 1450, configured to send operated data of the first object to the fourth node, to cause the fourth node to persistently store the operated data of the first object, where the operated data of the first object is data obtained by the operating unit 140 operating on the data of the first object based on the first operation indication.

In some embodiments, the data of the first object is located in a first page; the querying unit 1420 is configured to find, based on the first object indication, that the second node includes the first page; and the obtaining unit 1430 is configured to obtain the first page from the second node, to obtain the data of the first object.

In some embodiments, the first page may be associated with memory addresses of different nodes among the plurality of nodes, and the memory addresses associated with the first page are used to store data in the first page; the querying unit 1420 is configured to find, based on the first object indication, that the first page is associated with a first memory address of the second node; the obtaining unit 1430 is configured to obtain the data in the first page from the first memory address; and the obtaining unit 1430 is further configured to: associate the first page with a second memory address of the first node, and store the data in the first page into the second memory address.

In some embodiments, the apparatus 1400 further includes the sending unit 1450; the receiving unit 1410 is configured to receive a third access request, where the third access request includes a third operation indication and a third object indication, the third object indicates a third object in the directory, and the third operation indication indicates an operation to be performed on the third object; the querying unit 1420 is configured to find, based on the third object indication, that a fifth node among the plurality of nodes stores data of the third object; and the sending unit 1430 is configured to send the third operation indication to the fifth node, to cause the fifth node to operate on the data of the third object based on the third operation indication.

For functions of functional units of the apparatus 1400, refer to the foregoing descriptions of the operations performed by the node 111, for example, the operations performed by the node 111 in FIG. 6, FIG. 10, or FIG. 13. In addition, the second node may be the node 112 described above, the third node may be the node 113 described above, the fourth node may be the node 114 described above.

An embodiment of this application provides an apparatus 1500 for processing data. As shown in FIG. 15, the apparatus 1500 for processing data includes a processor 1510 and a memory 1520. The memory 1520 is configured to store an executable program. The processor 1510 is configured to execute the executable program stored in the memory 1520, so that the apparatus 1500 for processing data can perform the operations performed by the node 111, for example, the operations performed by the node 111 in FIG. 6, FIG. 10, or FIG. 13.

An embodiment of this application further provides a computer program product including instructions. The computer program product may be software or a program product that includes instructions and that can be run on a computer device or be stored in any usable medium. When the computer program product is run on a computer device, the computer device is caused to perform the operations performed by the node 111, for example, the operations performed by the node 111 in FIG. 6, FIG. 10, or FIG. 13.

An embodiment of this application further provides a computer-readable storage medium. The computer-readable storage medium may be any usable medium that can be used by a computer device for storage, or a data storage device, like a data center, including one or more usable media. The usable medium may be a magnetic medium (for example, a floppy disk, a hard disk, or a magnetic tape), an optical medium (for example, a DVD), a semiconductor medium (for example, a solid-state drive), or the like. The computer-readable storage medium includes instructions, and the instructions instruct the computer device to perform the operations performed by the node 111, for example, the operations performed by the node 111 in FIG. 6, FIG. 10, or FIG. 13.

Finally, it should be noted that the foregoing embodiments are merely intended to describe the technical solutions of this application, but not to limit this application. Although this application is described in detail with reference to the foregoing embodiments, a person of ordinary skill in the art should understand that modifications can still be made to the technical solutions described in the foregoing embodiments or equivalent replacements can be made to some technical features thereof. The modifications or replacements do not cause the essence of the corresponding technical solutions to depart from the protection scope of the technical solutions in embodiments of this application.

## Claims

1. A method for processing data in a distributed storage system, wherein the distributed storage system comprises a plurality of nodes, objects in a directory are stored in the plurality of nodes, the objects are subdirectories or files of the directory, and the method comprises:
receiving, by a first node among the plurality of nodes, a first access request, wherein the first access request comprises a first operation indication and a first object indication, the first object indication indicates a first object in the directory, and the first operation indication indicates an operation to be performed on the first object;
finding, by the first node based on the first object indication, that a second node among the plurality of nodes stores data of the first object;
obtaining, by the first node, the data of the first object from the second node; and
operating, by the first node, on the data of the first object based on the first operation indication.

2. The method according to claim 1, wherein a third node among the plurality of nodes is configured to record nodes that store data of the objects in the directory; and
the finding, by the first node based on the first object indication, that the second node among the plurality of nodes stores the data of the first object comprises: finding, by the first node in the third node based on the first object indication, that the second node stores the data of the first object, wherein
the third node is configured to, after the first node obtains the data of the first object, record that the first node stores the data of the first object.

3. The method according to claim 2, wherein the method further comprises:
receiving, by the first node, a second access request, wherein the second access request comprises a second operation indication and a second object indication, the second object indication indicates a second object in the directory, and the second operation indication indicates an operation to be performed on the second object; and
sending, by the first node, the second operation indication and the second object indication to the third node when load of the first node is greater than or equal to load of the third node, wherein
the third node is configured to obtain data of the second object based on the second object indication, and operate on the data of the second object based on the second operation indication.

4. The method according to any one of claims 1 to 3, wherein the obtaining, by the first node, the data of the first object from the second node comprises: obtaining, by the first node, the data of the first object from the second node when the data of the first object stored in the second node is the latest data of the first object.

5. The method according to any one of claims 1 to 4, wherein the plurality of nodes further comprise a fourth node configured to persistently store the data of the first object, and the method further comprises:
sending, by the first node, operated data of the first object to the fourth node, to cause the fourth node to persistently store the operated data of the first object, wherein the operated data of the first object is data obtained by the first node operating on the data of the first object based on the first operation indication.

6. The method according to any one of claims 1 to 5, wherein the data of the first object is located in a first page;
the finding, by the first node based on the first object indication, that the second node among the plurality of nodes stores the data of the first object comprises: finding, by the first node based on the first object indication, that the second node comprises the first page; and
the obtaining, by the first node, the data of the first object from the second node comprises: obtaining, by the first node, the first page from the second node to obtain the data of the first object.

7. The method according to claim 6, wherein the first page is associated with memory addresses of different nodes among the plurality of nodes, and the memory addresses associated with the first page are used to store data in the first page;
the finding, by the first node based on the first object indication, that the second node comprises the first page comprises: finding, by the first node based on the first object indication, that the first page is associated with a first memory address of the second node; and
the obtaining, by the first node, the first page from the second node comprises:
obtaining, by the first node, the data in the first page from the first memory address; and
associating, by the first node, the first page with a second memory address of the first node, and storing the data in the first page into the second memory address.

8. The method according to any one of claims 1 to 7, wherein the method further comprises:
receiving, by the first node, a third access request, wherein the third access request comprises a third operation indication and a third object indication, the third object indicates a third object in the directory, and the third operation indication indicates an operation to be performed on the third object;
finding, by the first node based on the third object indication, that a fifth node among the plurality of nodes stores data of the third object; and
sending, by the first node, the third operation indication to the fifth node, to cause the fifth node to operate on the data of the third object based on the third operation indication.

9. An apparatus for processing data, wherein a distributed storage system comprises a plurality of nodes, the apparatus is disposed on a first node among the plurality of nodes, objects in a directory are stored in the plurality of nodes, the objects are subdirectories or files of the directory, and the apparatus comprises:
a receiving unit, configured to receive a first access request, wherein the first access request comprises a first operation indication and a first object indication, the first object indication indicates a first object in the directory, and the first operation indication indicates an operation to be performed on the first object;
a querying unit, configured to find, based on the first object indication, that a second node among the plurality of nodes stores data of the first object;
an obtaining unit, configured to obtain the data of the first object from the second node; and
an operating unit, configured to operate on the data of the first object based on the first operation indication.

10. The apparatus according to claim 9, wherein a third node among the plurality of nodes is configured to record nodes that store data of the objects in the directory; and
the querying unit is configured to find, in the third node based on the first object indication, that the second node stores the data of the first object, wherein
the third node is configured to, after the obtaining unit obtains the data of the first object, record that the first node stores the data of the first object.

11. The apparatus according to claim 10, wherein the apparatus further comprises a sending unit;
the receiving unit is further configured to receive a second access request, wherein the second access request comprises a second operation indication and a second object indication, the second object indication indicates a second object in the directory, and the second operation indication indicates an operation to be performed on the second object; and
the sending unit is configured to send the second operation indication and the second object indication to the third node when load of the first node is greater than or equal to load of the third node, wherein
the third node is configured to obtain data of the second object based on the second object indication, and operate on the data of the second object based on the second operation indication.

12. The apparatus according to any one of claims 9 to 11, wherein the obtaining unit is configured to obtain the data of the first object from the second node when the data of the first object stored in the second node is the latest data of the first object.

13. The apparatus according to any one of claims 9 to 12, wherein the plurality of nodes further comprise a fourth node configured to persistently store the data of the first object, and the apparatus further comprises:
the sending unit, configured to send operated data of the first object to the fourth node, to cause the fourth node to persistently store the operated data of the first object, wherein the operated data of the first object is data obtained by the operating unit operating on the data of the first object based on the first operation indication.

14. The apparatus according to any one of claims 9 to 13, wherein the data of the first object is located in a first page;
the querying unit is configured to find, based on the first object indication, that the second node comprises the first page; and
the obtaining unit is configured to obtain the first page from the second node, to obtain the data of the first object.

15. The apparatus according to claim 14, wherein the first page is associated with memory addresses of different nodes among the plurality of nodes, and the memory addresses associated with the first page are used to store data in the first page;
the querying unit is configured to find, based on the first object indication, that the first page is associated with a first memory address of the second node;
the obtaining unit is configured to obtain the data in the first page from the first memory address; and
the obtaining unit is further configured to: associate the first page with a second memory address of the first node, and store the data in the first page into the second memory address.

16. The apparatus according to any one of claims 9 to 15, wherein the apparatus further comprises the sending unit;
the receiving unit is configured to receive a third access request, wherein the third access request comprises a third operation indication and a third object indication, the third object indicates a third object in the directory, and the third operation indication indicates an operation to be performed on the third object;
the querying unit is configured to find, based on the third object indication, that a fifth node among the plurality of nodes stores data of the third object; and
the sending unit is configured to send the third operation indication to the fifth node, to cause the fifth node to operate on the data of the third object based on the third operation indication.

17. An apparatus for processing data, comprising:
a memory, configured to store an executable program; and
a processor, configured to run the executable program to perform the method according to any one of claims 1 to 8.

18. A computer-readable storage medium, comprising computer program instructions, wherein when the computer program instructions are executed by a computer device, the computer device performs the method according to any one of claims 1 to 8.

19. A computer program product comprising instructions, wherein when the instructions are run by a computer device, the computer device is caused to perform the method according to any one of claims 1 to 8.
